# EUROPEAN PATENT SPECIFICATION

(11) **EP 3 990 716 B1**
(45) Date of publication and mention of the grant of the patent: **18.11.2026**
(21) Application number: 20734754.3
(22) Date of filing: 30.06.2020
(51) Int. Cl.: E04D 13/16, C04B 28/26, C09D 1/04, C04B 111/00, C04B 103/00, C08K 5/053

(54) **INVERTED ROOF**
UMGEKEHRTES DACH
TOIT INVERSÉ

(30) Priority: 30.06.2019 EP 19183513
(43) Date of publication of application: 04.05.2022
(73) Proprietor: Pittsburgh Corning Europe NV, 3980 Tessenderlo (BE)
(72) Inventor: LINDSAY, Clive T., Great Notley CM77 7ZU (GB); KUPPENS, Ellen, Mol 2400 (BE)
(74) Representative: Novagraaf Group
(86) International application number: PCT/EP2020/068343
(87) International publication number: WO 2021/001342

(56) References cited:
- GB-A- 1 215 464
- US-A- 3 930 876
- US-A- 4 347 285
- US-A- 4 719 723
- US-A1- 2009 155 603
- US-A1- 2017 191 270

## Description

### Field of the Invention

The present invention relates to an inverted roof and a method of installing the inverted roof, and in particular to an inverted roof including cellular glass insulation material.

### Background

An inverted roof system is a form of flat roof in which the waterproofing layer is underneath the thermal insulation layer as opposed to above it as in conventional flat roofing. A typical construction of an inverted roof is a waterproofing layer lies on top of the roof deck and insulation is laid on top of the waterproofing layer and weighed down with gravel ballast or paving slabs.

In this way, the waterproofing membrane is protected from the environment by at least the insulation layer. The insulation layer typically experiences environmental stress, such as such as frost, UV exposure and the expansion and contraction that comes about from summer/winter temperature cycles, which can be as much as 80°C on some roofs. Insulation materials that may withstand such conditions and are typically used in inverted roofs include expanded polystyrene (XPS).

However, there is a need for inverted roofs to include insulation materials with a high fire reaction classification. The fire testing and classification standards for construction products have been harmonized in the EU in European Standard EN 13501-1. The European Reaction to Fire classification system (Euro classes) is the EU common standard for assessing the qualities of building materials in the event of a fire, and covers three elements: a class based on combustibility and contribution to fire; a sub-class based on total smoke propagation/emission level; and a sub-class based on the amount of flaming droplets and particles when the material is exposed to fire.

GB1215464 discloses improvements in or relating to coatings for roofs.

The present invention has been devised in light of the above considerations.

### Summary of the Invention

At its most general, the present invention provides an inverted roof including cellular glass insulation, the cellular glass insulation having a protective coating on an upper surface.

In a first aspect, the present invention provides an inverted roof comprising a roof deck, a cellular glass insulation layer and a waterproofing layer; and wherein
the roof deck supports the waterproofing layer and cellular glass insulation layer;
the waterproofing layer is positioned between the roof deck and the cellular glass insulation layer; and
the cellular glass insulation layer comprises one or more layers of cellular glass insulation material and the uppermost layer of cellular glass insulation material includes a protective coating on its uppermost surface, such that the protective coating forms an upper face of the cellular glass insulation layer, and wherein the protective coating comprises an alkali silicate and a particulate filler having an average particle size from 20 to 500 microns, and wherein the thermal expansion coefficient of the particulate filler is within the range of 50 to 150% of the thermal expansion coefficient of the cell wall material of the cellular glass insulation material.

In other words, the inverted roof has a roof deck as a base, a waterproofing layer as a middle layer and a cellular glass insulation layer as an upper layer. The upper face of the cellular glass insulation layer has cellular glass insulation material with a protective coating on its upper surface. In this way the cellular glass insulation layer has a protective coating on its upper face.

The present invention provides an inverted roof including cellular glass insulation material, which has many favourable properties, such as good mechanical strength and an excellent Reaction to Fire classification (e.g. under Standard EN 13501-1). It has been found that cellular glass located at the upper face of the insulation layer of the inverted roof requires a protective coating to protect the cellular glass insulation material from damage.

In particular, the upper face of the insulation layer of an inverted roof is exposed to environmental conditions, and it is thought that the upper surface of the cellular glass insulation layer is particularly susceptible to damage from environmental conditions. For example, cutting of cellular glass slabs to form cellular glass insulation material creates open-cells at the surface of the insulation material where a cell has been divided due to the cut. In other words, cellular glass insulation material typically has an open-cell structure at each face of the material. It has been found that open-cells at the upper face of cellular glass insulation material may collect water and may experience freeze-thaw damage under changing environmental temperature. The present invention provides an inverted roof with an insulation layer having excellent properties and protected from damage, such as environmental damage.

The inverted roof may include one or more further layers or components.

In some embodiments, the inverted roof includes one or more water flow reduction layers. The water flow reduction layer or layers may be positioned on top of the cellular glass insulation layer. In other words, the one or more water flow reduction layers may be positioned on top of the protective coating of the uppermost layer of the cellular glass insulation layer. Additionally or alternatively, one or more water flow reduction layers are positioned between the cellular glass insulation layer and the roof deck. In some embodiments, the water flow reduction layer or layers may be between the cellular glass insulation layer and the waterproofing layer.

In some embodiments, the inverted roof includes one or more drainage membranes. The drainage membrane or membranes may be positioned on top of the cellular glass insulation layer. In certain embodiments, the inverted roof includes a drainage membrane and a water flow reduction layer. In these embodiments, the water flow reduction layer may be positioned on top of the cellular glass insulation layer and the drainage membrane may be positioned on top of the water flow reduction layer. Additionally or alternatively, one or more drainage membranes are positioned between the cellular glass insulation layer and the roof deck. In some embodiments, the drainage membrane or membranes may be between the cellular glass insulation layer and the waterproofing layer.

In some embodiments, the inverted roof may further include roof ballast positioned directly or indirectly abutting the upper surface of the cellular glass insulation layer.

In a second aspect, the present invention provides a method of installing an inverted roof, the method comprising the steps of:
- installing a waterproofing layer to a roof deck; and then
- installing a cellular glass insulation layer to the waterproofing layer and roof deck so that the waterproofing layer is positioned between the roof deck and the cellular glass insulation layer;
and wherein the cellular glass insulation layer comprises one or more layers of cellular glass insulation material and the uppermost layer of cellular glass insulation material includes a protective coating on its uppermost surface, such that the protective coating forms an upper face of the cellular glass insulation layer, and wherein the protective coating comprises an alkali silicate and a particulate filler having an average particle size from 20 to 500 microns, and wherein the thermal expansion coefficient of the particulate filler is within the range of 50 to 150% of the thermal expansion coefficient of the cell wall material of the cellular glass insulation material.

The invention includes the combination of the aspects and preferred features described, within the limits defined by the claims.

### Detailed Description of the Invention

Aspects and embodiments of the present invention will now be discussed with reference to the accompanying figures.

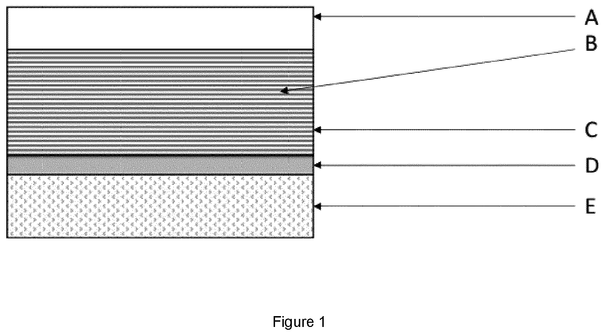

Figure 1 shows a schematic of the inverted roof of the present invention.

Further aspects and embodiments will be apparent to those skilled in the art.

Unless otherwise stated the percentages by weight specified for the components in the curable and potassium silicate coatings described herein are calculated based on the total weight of the composition. Moreover, references to weight percentages refer to the % weight by dry mass of the relevant component. That is, the weights are based on the actual weight amount of the component absent any water, such as adsorbed water or water of hydration

The present invention provides an inverted roof according to claim 1 including cellular glass insulation, the cellular glass insulation having a protective coating on an upper surface.

Figure 1 shows a schematic of an inverted roof of the present invention. Layer A is the protective layer on the upper surface of the cellular glass insulation layer C. The glass cellular insulation layer is formed of the cellular glass insulation material B. The cellular glass insulation layer C is laid on top of the waterproofing layer D. The waterproofing layer is laid on top of the roof deck E.

### Cellular glass insulation layer

The inverted roof includes a cellular glass insulation layer including one or more layers of cellular glass insulation material. Cellular glass insulation material is typically provided in cuboid slabs. A layer of cellular glass insulation material typically includes a single layer of orthogonal and/or cuboid cellular glass insulation slabs arranged side by side. Two or more layers of cuboid cellular glass insulation slabs arranged side by side may be stacked to form the cellular glass insulation layer having more than one layer of cellular glass insulation material.

The protective coating is present on the upper surface of the cellular glass insulation material that is located at the upper face of the cellular glass insulation layer. The protective coating may be present on further surfaces of the cellular glass insulation material. For example, the protective coating may be present on one more sides and/or the lower surface of the cellular glass insulation material.

In some embodiments, the protective layer is only present on the upper surface of the cellular glass insulation material located at the upper face of the cellular glass insulation layer. In these embodiments, the other surfaces of the cellular glass insulation material may be uncoated.

In particular embodiments, the cellular glass insulation material is dry laid on the inverted roof. In other words, the cellular glass insulation layer includes cellular glass insulation material without a cellular glass adhesive.

In alternative embodiments, the cellular glass insulation material is at least partially coated with a cellular glass adhesive. In these embodiments, the surfaces of cellular glass insulation material adjacent to or abutting another cellular glass insulation material in the cellular glass insulation layer include a cellular glass adhesive. For example, the cellular glass insulation layer may include cellular glass adhesive between two adjacent or abutting surfaces of cellular glass insulation material slabs in the same cellular glass insulation material layer or between two adjacent or abutting surfaces of the cellular glass material slabs in adjacent cellular glass insulation material layers.

Cellular glass adhesives are known *per se.* For example, Pittsburgh Corning Europe N.V supply various insulation adhesives for their cellular glass insulation material, FOAMGLAS^{®}, and include PC^{®} 56, PC^{®} 11, PC^{®} 58, PC^{®} 500, PC ^{®} Green and PC^{®} 160 Flexible tile adhesive. In some embodiments, compositions suitable for producing the protective coating may also be used as a cellular glass insulation. In particular embodiments, the aqueous coating compositions described herein may be used as a cellular glass adhesive. Alternatively, the cellular glass adhesive may be PC^{®} 164 coating available from Pittsburgh Corning Europe N.V.

The total thickness of the cellular glass insulation layer may be in the range of 100 mm to 500 mm. The thickness of the cellular glass insulation layer as used herein is the minimum distance from the uppermost to the lowermost parts of the layer. In some embodiments, the total thickness of the cellular glass insulation layer may be in the range of 250 mm to 400 mm.

A typical thickness of cellular glass insulation material slabs is in the range of 100 to 200 mm. In some embodiments, the cellular glass insulation layer includes from 1 to 5 cellular glass insulation material layers. In other words, the cellular glass insulation layer may be formed of a single insulation material layer. Alternatively, the cellular glass insulation layer may be formed of 2 to 5 insulation material layers stacked on top of each other. In particular embodiments, the cellular glass insulation layer includes 2 or 3 cellular glass insulation material layers. In more particular embodiments, the cellular glass insulation layer includes 2 cellular glass insulation material layers.

In particular embodiments, the cellular glass insulation layer has a Reaction to Fire classification according to Standard EN 13501-1 of class A. In other words, the cellular glass insulation layer has a Reaction to Fire classification of A1 or A2 according to Standard EN 13501-1. In more particular embodiments, the cellular glass insulation layer has a Reaction to Fire classification of A1 according to Standard EN 13501-1.

### Protective coating

The protective coating may be a protective coating suitable to protect the upper surface of the cellular glass insulation material (and so the upper face of the cellular glass insulation layer) from damage, such as environmental damage. In some embodiments, the protective coating is adhered to the upper surface of the cellular glass insulation material. Adhesion of the protective coating to the surface of the cellular glass insulation material may help with long-term stability of the cellular glass insulation layer.

The protective coating in the inverted roof of the invention comprises an alkali silicate. Also described herein are protective coatings be selected from the group consisting of mineral protective coatings, silica based protective coatings (silicones), bakelite protective coatings, liners glued with an A2 glue, polyurea protective coatings, and alkali metal silicate based protective coatings.

Specific examples of protective coatings suitable for applying to cellular glass insulation materials include, but are not limited to:
- calcium sulphate-based coatings, such as mixes of modified calcium sulphate with inert mineral fillers; a commercially available example includes PC^{®} High Temperature Anti-Abrasive (H.T.A.A.) available from Pittsburgh Corning Europe N.V.;
- modified silica-based coatings, such as two-component systems including an inorganic slurry formed from glass powders and fillers (component 1) and a modified silica dispersion (component 2); a commercially available example includes PC^{®} 80M mortar available from Pittsburgh Corning Europe N.V.;
- lime-based coatings and renders, such as a mixture of sands, cement and lime; a commercially available example includes PC^{®} 74 A1 or A2 available from Pittsburgh Corning Europe N.V..

### Alkali silicate coatings

The protective coating is an alkali metal silicate (also known as alkali silicate) based protective coating. For example, the protective coating may be a coating comprising sodium silicate, potassium silicate or a mixture thereof. The alkali metal silicate-based coatings may provide excellent adhesion to the cellular glass insulation material. Excellent adhesion of the protective coating to the cellular glass insulation material is not essential for the inverted roof application. However, it may be advantageous from the perspective of long-term stability.

In particular embodiments, the alkali metal silicate protective coating may include potassium silicate. Particular examples of suitable alkali metal silicate protective coating are the potassium silicate coatings described in co-pending unpublished application EP 18195314.2.

The protective coating may be formed from an aqueous coating composition comprising alkali silicate and a curing agent, wherein the alkali silicate comprises potassium silicate. Such compositions may be applied to a surface of the cellular glass insulation material substrate and cured to form a coated cellular glass insulation material as described herein.

In particular embodiments, the protective coating comprises 20 to 65 wt.% alkali silicate based on the total weight of the cured coating and the alkali silicate comprises potassium silicate. In particular embodiments, the protective coating includes 20 to 65 wt.% alkali silicate comprising potassium silicate and lithium silicate.

A potassium silicate coating may provide a protective coating having desirable properties, such as one or more of good coating-cellular glass substrate adhesion, good water resistance and good fire reaction classification.

The protective coating may be formed from an aqueous coating composition as described herein, within the limits defined by the claims. For example, the protective coating may be formed by curing an aqueous coating composition comprising alkali silicate and a curing agent, wherein the aqueous coating composition comprises:
(a) 10 to 40 wt.% of the alkali silicate, the alkali silicate comprising potassium silicate; and
(b) 15 to 60 wt.% of the curing agent; and
(c) at least 15 wt.% of water;
   Wherein the % weight amounts are based on the total weight of the aqueous coating composition.

In a particular embodiment, the aqueous coating composition comprises:
(a) 10 to 40 % by weight of an alkali silicate comprising potassium silicate and lithium silicate in amounts of
   5 to 15 % by weight of K₂O;
   0.01 to 1 % by weight Li₂O; and
   5 to 25 % by weight of SiO₂;
   and the weight ratio of SiO₂ to K₂O is at least 1; and
(b) 15 to 60 % by weight of a curing agent; and
(c) 0.1 to 15 % by weight of one or more compounds of Formula 1

   R(OH)ₙ Formula 1

   wherein
   R denotes an optionally substituted C₂₋₆hydrocarbyl or C₂₋₆carbohydrate moiety and n is an integer from 1 to 6; and
(d) 0.02 to 0.8 % by weight of surfactant relative to the total weight of the composition; and
(e) at least 15 % by weight of water;
wherein the % wt amounts are based on the total weight of the aqueous coating composition.

The aqueous coating composition further comprises a particulate filler material, optionally wherein the particulate filler material is present in an amount of from 20 to 30 wt % relative to the total weight of the composition.

In a particular embodiment, the aqueous coating composition comprises:
(a) 10 to 25 % by weight of a silicate component comprising potassium silicate and lithium silicate in amounts of:
   5 to 10 % by weight of K₂O;
   0.01 to 0.5 % by weight Li₂O; and
   5 to 15 % by weight of SiO₂;
   and the weight ratio of SiO₂ to K₂O is at least 1,
(b) 20 to 50 % by weight of a curing agent,
(c) 0.1 to 10 % by weight of one or more compounds of Formula 1

   R(OH)ₙ Formula 1

   wherein
   R denotes an optionally substituted C₂₋₆hydrocarbyl or C₂₋₆carbohydrate moiety and n is an integer from 1 to 6;
(d) 0.01 to 0.5 % by weight of surfactant relative to the total weight of the composition; and
(e) at least 15 % by weight of water; and
(f) 20 to 30 % by weight of a particulate filler material,
wherein all % by weight amounts specified are relative to the total weight of the composition.

The aqueous coating composition may comprise an alkali silicate, a curing agent and a particulate filler material, whereby the particulate filler material has a thermal expansion coefficient in the range of 50-150% of the thermal expansion coefficient of the cell wall material of the insulation material, whereby the particulate filler material has a bulk density of at least 0.30 kg/dm³, and whereby the coating, when heated from room temperature up to a temperature of at least 200°C exhibits a volumetric expansion of at most 50%.

The aqueous coating composition may comprise:
(a) 10 to 40 % by weight of an alkali silicate comprising potassium silicate and lithium silicate in amounts of
   5 to 15 % by weight of K₂O;
   0.01 to 1 % by weight Li₂O; and
   5 to 25 % by weight of SiO₂;
   and the weight ratio of SiO₂ to K₂O is at least 1; and
(b) 15 to 60 % by weight of a curing agent; and
(c) 0.1 to 15 % by weight of one or more compounds of Formula 1

   R(OH)ₙ Formula 1

   wherein
   R denotes an optionally substituted C₂₋₆hydrocarbyl or C₂₋₆carbohydrate moiety and n is an integer from 1 to 6; and
(d) 0.02 to 0.8 % by weight of surfactant relative to the total weight of the composition; and
(e) at least 15 % by weight of water;
wherein the % wt amounts are based on the total weight of the aqueous coating composition.

In a particular embodiment, the aqueous coating composition comprises:
(a) 16 to 36 % by weight of an alkali silicate comprising potassium silicate and lithium silicate in amounts of
   8 to 15 % by weight of K₂O;
   0.02 to 0.8 % by weight Li₂O; and
   8 to 20 % by weight of SiO₂;
   and the weight ratio of SiO₂ to K₂O is at least 1; and
(b) 20 to 50 % by weight of a curing agent; and
(c) 0.2 to 15 % by weight of one or more compounds of Formula 1

   R(OH)ₙ Formula 1

   wherein
   R denotes an optionally substituted C₂₋₆hydrocarbyl or C₂₋₆carbohydrate moiety and n is an integer from 1 to 6; and
(d) 0.02 to 0.8 % by weight of surfactant relative to the total weight of the composition; and
(e) at least 15 % by weight of water;
wherein the % wt amounts are relative to the total weight of components (a) to (e).

The aqueous coating composition further comprises a particulate filler material, optionally wherein the particulate filler material is present in an amount of from 20 to 30 wt % relative to the total weight of the composition.

The aqueous coating compositions may comprise:
(a) 10 to 25 % by weight of alkali silicate comprising potassium silicate and lithium silicate in amounts of:
   5 to 10 % by weight of K₂O;
   0.01 to 0.5 % by weight Li₂O; and
   5 to 15 % by weight of SiO₂;
   and the weight ratio of SiO₂ to K₂O is at least 1,
(b) 20 to 50 % by weight of a curing agent,
(c) 0.1 to 10 % by weight of one or more compounds of Formula 1

   R(OH)ₙ Formula 1

   wherein
   R denotes an optionally substituted C₂₋₆hydrocarbyl or C₂₋₆carbohydrate moiety and n is an integer from 1 to 6;
(d) 0.01 to 0.5 % by weight of surfactant relative to the total weight of the composition; and
(e) at least 15 % by weight of water; and
(f) 20 to 30 % by weight of a particulate filler material,
wherein all % by weight amounts specified are relative to the total weight of the composition.

The aqueous coating compositions may include a curing agent. As such, these compositions are typically curable or capable of being cured. Curing and curing conditions are readily known to the person skilled in the art.

In further embodiments, the protective coating is a potassium silicate coating comprising:
(a) 20 to 65 % by weight of an alkali silicate comprising potassium silicate and lithium silicate in amounts of:
   10 to 32 % by weight of K₂O;
   0.05 to 1 % by weight Li₂O; and
   10 to 32 % by weight of SiO₂;
   and the weight ratio of SiO₂ to K₂O is at least 1; and
(b) optionally 20 to 30 % by weight of a particulate filler material,
where all % by amounts are based on the total weight of the potassium silicate coating.

### Aqueous coating composition

In some embodiments, the aqueous coating composition comprises:
(a) 10 to 40 wt.% of the alkali silicate, the alkali silicate comprising potassium silicate; and
(b) 15 to 60 wt.% of the curing agent; and
(c) at least 15 wt.% of water;
   Wherein the % weight amounts are based on the total weight of the aqueous coating composition.

### Alkali Silicate

The aqueous curable coating composition and resulting potassium silicate coating includes alkali silicate. Alkali silicate is a generic name for the group of compounds with the formula M₂ₓSiO₂₊ₓ or (M₂O)ₓ.SiO₂ where M is an alkali metal. Alkali silicate is also commonly used for a mixture of compounds having the formula above, such that x may typically be non-stoichiometric (in other words, x may not be a whole number). Alkali silicates may be characterised by the weights or the weight ratio of the alkali metal oxide and silica. For example, a composition having 25 wt.% alkali silicate including a 1.5:1 SiO₂:M₂O weight ratio may be expressed as having 10 wt.% M₂O and 15 wt.% SiO₂. Alkali silicates may sometimes be referred to "waterglass" (or "water glass") due to the compounds' solubility in water, although this term traditionally is used for sodium silicate.

The alkali silicate described herein includes potassium silicate. Potassium silicate may be the sole alkali silicate or the alkali silicate may include potassium silicate and one or more alkali silicates. In particular embodiments, the alkali silicate includes potassium silicate and lithium silicate. In some embodiments, the aqueous coating compositions described herein include10 to 40 % by weight of an alkali silicate comprising potassium silicate and lithium silicate. The alkali silicate may contain 5 to 15 % by weight of K₂O, 0.01 to 1 % by weight Li₂O; and 5 to 25 % by weight of SiO₂. In these embodiments, the weight ratio SiO₂ to K₂O is typically at least 1.

In particular embodiments, the aqueous coating compositions described herein include 10 to 25% by weight of an alkali silicate. The alkali silicate may contain 5 to 10% by weight of K₂O, 0.01% to 0.5% by weight Li₂O and 5 to 15% by weight of SiO₂ (these percentages being based on the total weight of the composition). In these embodiments, the weight ratio SiO₂ to K₂O is typically at least 1.

Without wishing to be bound by any theory the applicant believes that where the amount of the silicate, K₂O and/or SiO₂ ingredients is / are present in the coating composition in the inverted roof of the invention in an amount below the lower boundary of their respective broadest range specified herein, then the bonding strength of the coating to the substrate is relatively weaker. On the other hand it is also believed that coating compositions where the amount of silicate, K₂O and/or SiO₂ is above the upper boundary of their respective broadest range specified herein, the resulting coating has been observed to exhibit relatively poorer water resistance and leaching of soluble alkali metal silicate ingredients from the composition due to their high concentrations. Similarly it is believed that weight ratios of SiO₂ to K₂O lower than the range claimed exhibit relatively lower water resistance due to the higher solubility of the alkali metal silicate components. It is also believed that coating compositions which have an amount of Li₂O below the lower boundary of the broadest range specified for Li₂O herein may form coatings that are relatively less resistant to shearing and deformation.

In these embodiments, the SiO₂ to M₂O weight ratio may be in the range of from 1.0:1 to 1.5:1. In some embodiments, the SiO₂ to M₂O weight ratio may be in the range of from 1.2:1 to 1.4:1, such as around 1.3:1.

Alkali silicates are commercially available and the weight percentage of the M₂O and SiO₂ is typically provided. Where the aqueous coating composition includes a mixture of alkali silicates, such mixtures may be commercially available in the desired relative amounts of alkali silicates or alkali silicates may be mixed in the desired relative amounts. For example, an alkali silicate composition may include 16 to 22% by weight of K₂O, such as 19 to 21%, e.g. about 20% by weight and 20 to 30% by weight SiO₂, such as 24 to 27 %, e.g. about 25 or 26 %. The alkali silicate composition may also include 0.05% to 1 % by weight. Typically, an alkali silicate composition also includes water. The water may be present in 40 to 70 % by weight of the alkali silicate composition. The alkali silicate composition is then typically diluted with the curing agent and optionally water and/or one or more additives to form the aqueous coating composition described herein.

### Curing agent

The aqueous coating composition described herein may further incorporate at least one curing agent. The curing agent may be any suitable agent that cures composition, such as any curing agent capable of curing the alkali silicate component. It is generally preferred that the curing agent is insoluble in water.

The curing agent as used herein denotes any moiety which is capable of reacting with (or causing a reaction with, e.g. be a catalyst for) a component of the composition, such as the alkali silicate component, in a curable composition of the invention in a curing step to form a potassium silicate coating as described herein.

The curing agent may comprise or be a single agent or comprise a multiple component system. The curing agent may comprise catalysts for curing and/or may comprise precursors for reactive (or more reactive than the precursor) curing agent(s) which can undergo the curing reaction in the curing step.

Thus, if necessary, the start of curing can be controlled by generation of one, or a further, curing agent from a precursor curing agent. By this means curing of a curable composition may be prevented or reduced until the curable composition is ready for use (e.g. coated onto a substrate) and the shelf-life of the curable composition can be prolonged. The curable composition of the invention may comprise one or more inhibitors (e.g. free radical inhibitors and/or antioxidants) which may prevent and/or delay curing until the inhibitors are removed and/or deactivated (e.g. by heating). The time taken for curing may be selected according to the needs of the formulator and/or end user and preferably is chosen to provide a sufficiently long workability time for the curable composition to have properties which allow it to be applied evenly to coat the substrate (preferably an insulating substrate such as a cellular glass material) so it will form a barrier thereon when cured and yet is sufficiently short that the uncured liquid coating composition does not flow from the substrate or is otherwise adversely impacted before the coating can be cured. Curing times can be controlled by controlling the temperature and / or amount of radiation used. The curing step may be catalysed by control of pH, for example by use of acid catalysts and/or by control of the amount of water present and/or by control of the amount of oxygen (or air) present.

Preferred curing agents are any known in the art capable of reacting with one or more of potassium silicate, lithium silicate and/or silicon dioxide, optionally in one embodiment by forming a three dimensional network in the potassium silicate coating obtained after curing, more optionally in the same or a different embodiment by forming Si-O bonds.

Examples of suitable curing agents that cure alkali metal silicates include organic acids, acidic phosphate salts and/or weak mineral acids or metal salts. The curing agent(s) may, for example, be an inorganic phosphate, e.g. a metal phosphate. Particularly suitable curing agents are aluminium phosphates, e.g. aluminium metaphosphates. As known to those skilled in the art, the term "aluminium phosphate" covers a range of compounds with differing P₂O₅ and Al₂O₃ contents. Mixtures of aluminium phosphates of such different compositions may be used. For example, an aluminium phosphate containing about 80% P₂O₅ and 20% Al₂O₃ may be used. Additionally or alternatively, an aluminium phosphate containing about 60% P₂O₅ and about 30% Al₂O₃ may be used. In a preferred embodiment, a mixture of an aluminium phosphate containing (i) about 80% P₂O₅ and 20% Al₂O₃ and (ii) about 60% P₂O₅ and 40% Al₂O₃ are used. As further understood by those skilled in the art, the higher the Al₂O₃ content of the aluminium phosphate the higher the reactivity with silicates. Suitable aluminium phosphate hardeners are available under the trade mark Fabutit^{®}.

In some embodiments, the total amount of curing agent present in the aqueous coating compositions composition may be from 15 to 60% by weight, for instance, 20 to 50% by weight, more particularly 25 to 35% by weight, and even more particularly 26 to 30% by weight of the total aqueous coating composition, such as about 28% by weight. Without wishing to be bound by any theory the applicant has discovered that if the curing agent is present in a coating composition of the protective coating of the inverted roof of the invention in amounts below the lower boundary of the broadest range specified for curing agent herein, this will provide potassium silicate coatings which are relatively less resistant to water and thus result in more soluble silicate having a lower water resistance and increased leaching of components from the coating. If the curing agent is present in amounts above the upper boundary of the broadest range specified for curing agent herein, this may lead to coatings that are relatively more susceptible to leaching of curing agent (e.g. phosphate) from the coating, display more efflorescence and/or lead to an increase in coating hygroscopicity.

### Water

As described herein, the aqueous coating compositions may comprise water in at least about 15 % by weight relative to the weight of the composition. The water may for instance be provided in an amount of at least 20 % or 30% by weight. The water may for example be present in an amount of from 40 % wt., 50% wt. or 60% wt. Typically, the water is not provided in an amount of more than about 60% by weight.

### Curability

It will be understood that aqueous coating compositions described herein are typically curable. It will be appreciated that the step of curing will typically involve reacting the alkali silicate of the composition to form internal bonds between the components thereof such that the material obtained after curing has different properties compared to the properties of the curable composition before curing. The curing step will typically generate cross-links within the alkali silicate due to generation of bonds between moieties within the composition to form oligomeric species, polymeric species and/or a three dimensional network. The skilled person will appreciate that alkali silicate can be cured using certain known curing agents, such as those described herein. This will usually result in the formation of Si-O covalent bonds. Optionally, where the curable composition is applied to a substrate surface and cured *in situ* thereon, in the curing step bonds may be formed between the potassium silicate coating and the substrate to improve the adhesion thereto. Thus in one embodiment of the invention it is especially preferred that the curing agent be capable of causing a reaction between the substrate to which the curable composition is applied (which may comprise, consist essentially of, or preferably consist of a substrate also containing silicate material). The substrate may for instance be cellular glass material. Curing the composition may thus provide improved properties such providing one or more of a water barrier, oxygen barrier, increased hardness, increased abrasion resistance, increased chemical resistance and/or adhesion to any underlying substrate surface to which the curable composition was applied.

Curing can be achieved by any means known to the art, for example inherently by mixing components that trigger a chemical reaction, thermally, or by irradiation (e.g. by ionising radiation optionally in the presence of initiators).

Thermal curing can be achieved by the action of heat from any suitable source which may be used to promote a reaction and/or generate an initiator *in situ* from the curable composition to initiate the reaction of the curing step. Thermal curing is preferred. Typically this will involve applying heat to the curable composition, most preferably in a two stage process using gentle heating followed by heating at a higher temperature. However, any temperature that initiates a reaction between the curing agent and silicate is suitable.

Alternatively or additionally, curing may be achieved by radiation. Curing by radiation (and related terms) refers to a method of curing by exposing a material to electromagnetic radiation (such as actinic radiation) and/or other ionizing radiation. Radiation curing can be achieved with or without oxygen (air) and/or initiator. Ionizing radiation is electromagnetic radiation (e.g. gamma-rays or X-rays) or particulate radiation (e.g. electron beam (EB)) that is sufficiently energetic to form ions and/or radicals in the irradiated material and thus initiate polymerisation of monomers and/or cross-linking of polymers without adding photo-additive (such as photo-sensitizer and/or photo-initiator). Actinic radiation denotes ultraviolet (UV) or visible light (preferred predominantly in the ultra-violet region) that will initiate substantial cross-linking and/or polymerisation only when irradiation occurs in the presence of photo-additive.

Suitable curing agents for use in the curable compositions are described herein.

Curable compositions as described herein are useful for forming protective coatings on cellular glass insulation material by application of the composition to the insulation material and effecting curing. The resultant cured coatings demonstrate desirable adhesion to the underlying substrate and have good compressive strength.

In embodiments wherein the potassium silicate coating comprises particulate filler material, the coating may display advantageous barrier properties. For instance, in embodiments wherein a fire resistant particulate is present, the cured material may desirably exhibit a good fire reaction classification as discussed further below.

The potassium silicate based protective coatings may suitably have a degree of elasticity which permits a degree of flexing of the cellular glass insulation material without damage to the protective coating.

### Additives

The aqueous coating compositions may include one or more coating additives. In particular embodiments, the coating composition includes one, more than one or all of: a compound of Formula 1 (as described herein), a surfactant and a particulate filler material.

### Compound of Formula 1

The curable composition of the invention may comprise 0.2 to 15 % by weight of one or more compounds of Formula 1

R(OH)ₙ Formula 1

wherein R denotes an optionally substituted C₂₋₆hydrocarbyl or C₂₋₆carbohydrate moiety and n is an integer from 1 to 6.

In embodiments, no more than one compound of formula 1 is provided. The compound(s) of formula 1 are small molecule alcohols. It will be appreciated that compounds of formula 1 are hydrophilic. Hydrophilicity may for example be determined by any suitable parameter such as having a hydrophilic lipophilic balance (HLB) value greater than 10. Such compounds may be provided as "wetting agents" in the compositions of the invention. It will be understood that such compounds typically show at least some degree of miscibility with water. Without wishing to be bound by theory, it is thought that the reason for the advantageous effect observed when providing compounds of Formula 1 is that the compounds may interact with the alkali metal silicate component and/or optionally the particulate component (preferably just the silicate component (a)), in a manner similar to water, for example by hydrogen bonding thereto. The compound(s) of formula 1 typically allow the compositions to dehydrates in a controlled manner (e.g. during curing, e.g. on a substrate surface).

The applicant believes that if the compound(s) of formula 1 are present in a coating composition described herein in amounts below the lower value of the range specified herein, then once the composition is applied to a substrate, the resulting coating may display less controlled curing and be more prone to becoming inflexible. If the compound(s) of formula 1 are provided in any amount higher than the upper value of the range specified herein, then the resulting coating may be more difficult to dry and also may demonstrate diminished fire resistance.

Preferably the compound(s) of formula I are volatile enough so as to be removed from the composition during or following curing at ambient conditions, upon heating to 30 °C , 40 °C, 50 °C or 60 °C, 70 °C or 80 °C.

The terms "hydrocarbo" and "optionally substituted" are defined herein. The term 'hydrocarbo' or 'hydrocarbo group' as used herein denotes a moiety consisting of hydrogen atoms and carbon atoms to which the respective OH group(s) is bonded. The hydrocarbo group may be saturated or unsaturated. It may, for instance, be saturated (e.g. an alkyl group). Alternatively, it may contain one or more double (alkenyl) and/or triple bonds (alkynyl) and/or aromatic groups (e.g. aryl) and where indicated may be substituted with other functional groups.

The hydrocarbo group may contain linear, branched, and / or cyclic sections. The hydrocarbo group may thus be linear, branched, or cyclic. In an embodiment, the hydrocarbo group is linear and acyclic (e.g. in the case of glycerine). In another embodiment, the hydrocarbon group is branched and acyclic (e.g. in the case of pentaerythritol).

In an embodiment, the optionally substituted C₂₋₆hydrocarbo is optionally substituted C₂₋₄hydrocarbo, such as C₂-hydrocarbo, C₃-hydrocarbo, C₄-hydrocarbo or C₅-hydrocarbo. The optionally substituted C₂₋₆hydrocarbo may be optionally substituted C₃-hydrocarbo or C₅-hydrocarbo, e.g. C₃-hydrocarbo. In embodiments, the optional substituents may be selected from one or more of amino, thiol, carboxy, C₁₋₄alkoxy and cyano groups. Typically, the hydrocarbo group is not substituted.

The term "carbohydrate" denotes a moiety consisting of hydrogen atoms, oxygen atoms, and carbon atoms to which the respective OH group(s) is bonded. Examples are ethers, acetals and hemi acetals. The carbohydrate may for instance be a saccharide, such as a simple sugar, e.g. glucose or fructose. The group may be saturated or unsaturated. It may, for instance, be saturated. Alternatively, it may contain one or more double and/or triple bonds and where indicated may be substituted with other functional groups. The carbohydrate group may contain linear, branched, and / or cyclic sections. The carbohydrate group may thus be linear, branched, or cyclic.

Formula 1 represents a mono-ol when n is 1, and a polyol when n is > 1. In embodiments, n is 1. Alternatively, n may be 2. Alternatively, n may be 3. Alternatively, n may be 4. Alternatively, n may be 5. Alternatively, n may be 6. Typically n is from 2 to 5, e.g. 3 or 4. In embodiments, n is from 2 to 5 (e.g. 3 to 4) and R is a C₂-C₅hydrocarbo group (e.g. a C₃-C₅hydrocarbo group), and in particular embodiments is a C₂-C₅alkyl group, e.g. a C₃-C₅alkyl group. The alkyl group may be selected from n-propyl, i-propyl, n-butyl, t-butyl, i-butyl, n-pentyl, t-pentyl, neopentyl, isopentyl, sec-pentyl, 3-pentyl, sec-isopentyl. When n is 3, the compound of formula 1 is typically glycerine. When n is 4, the compound of formula 1 is typically pentaerythritol. The compound of Formula 1 may thus be selected from the group consisting of glycerine and pentaerythritol, e.g. glycerine.

The total amount of the compound(s) of formula 1 that may be present in the curable composition of the protective coating of the inverted roof of the invention is from 0.2 to 15 % based on the total weight of components (a) to (e). In embodiments, the compound(s) of formula 1 are present in an total amount of from 0.1 to 10%, such as from 0.2% to 8%, or 0.5% to 5%, for instance 1% to 3%, e.g. 1.5% to 2.5% by weight based on the total weight of the composition.

The compound(s) of formula 1 may be one or more diol(s) and/or triol(s), usefully one or more triol(s). Advantageously the polyol(s) may be C₂₋₅polyol(s), more advantageously C₂₋₄polyol(s). In one particularly preferred embodiment of the invention component (d) comprises, preferably consists essentially of, most preferably consists of a propanetriol, for example glycerine (i.e. 1,2,3-trihydroxypropane, also known as glycerol) and/or pentaerythritol.

The total amount of the polyol(s) of component (d) that may be present in the composition is in an amount of from 0.2 to 8%, conveniently from 0.5% to 5%, more conveniently from 1% to 3%, most conveniently 1.5% to 2.5% by weight based on the total weight of the composition.

Where glycerine and/or pentaerythritol are used as the compound of formula 1, the glycerine and/or pentaerythritol may in embodiments be present in the composition in an amount of from 0.5% to 5%, by weight based on the total weight of the composition.

The hydrocarbo or carbohydrate group may be substituted or unsubstituted, such as unsubstituted. Typically, substitution refers to the notional replacement of a hydrogen atom with a substituent group, or two hydrogen atoms in the case of substitution by =O or =NR, etc. When a particular group is substituted, there will generally be substitution by 1 to 5 substituents, such as 1 to 3 substituents, for instance 1 or 2 substituents, e.g. 1 substituent.

Unless indicated otherwise herein, the optional substituent(s) may be independently OH, NH₂, halogen, trihalomethyl, trihaloethyl, -NO₂, -CN, -N⁺(C₁₋₆alkyl)₂O⁻ , -CO₂H, -CO₂C₁₋₆alkyl, -SO₃H, -SOC₁₋₆alkyl, -SO₂C₁₋₆alkyl, -SO₃ C₁₋₆alkyl, -OC(=O)OC₁₋₆alkyl, -C(=O)H, -C(=O)C₁₋₆alkyl, -OC(=O)C₁₋₆alkyl, =O, -N(C₁₋₆alkyl)₂, -C(=O)NH₂, -C(=O)N(C₁₋₆alkyl)₂, -N(C₁₋₆alkyl)C(=O)O(C₁₋₆alkyl), -N(C₁₋₆alkyl)C(=O)N(C ₁₋₆alkyl)₂, -OC(=O)N(C₁₋₆alkyl)₂, -N(C₁₋₆alkyl)C(=O)C₁₋₆alkyl, -C(=S)N(C₁₋₆alkyl)₂, -N(C₁₋₆alkyl)C(=S)C₁₋₆alk yl, -SO₂N(C₁₋₆alkyl)₂, -N(C₁₋₆alkyl)SO₂C₁₋₆alkyl, -N(C₁₋₆alkyl)C(=S)N(C₁₋₆alkyl)₂, -N(C₁₋₆alkyl)SO₂N(C₁₋₆alkyl )₂, -C₁₋₆alkyl, -C₁₋₆heteroalkyl, -C₃₋₆cycloalkyl, -C₃₋₆heterocycloalkyl, -C₂₋₆alkenyl, -C₆₋₁₄aryl, -C₆₋₁₄heteroaryl , -C₂₋₆heteroalkenyl, -C₃₋₆cycloalkenyl, -C₃₋₆heterocycloalkenyl, -C₂₋₆alkynyl, -C₂₋₆heteroalkynyl, -Z^{u}-C₁₋₆alk yl, -Z^{u}-C₃₋₆cycloalkyl, -Z^{u}-C₂₋₆alkenyl, -Z^{u}-C₃₋₆cycloalkenyl -Z^{u}-C₂₋₆alkynyl, or -Z^{u}-C₁₋₆alkylaryl wherein Z^{u} is independently O, S, NH or N(C₁₋₆alkyl).

Exemplary optional substituent(s) is/are independently halogen, trihalomethyl, trihaloethyl, -NO₂, -CN, -N⁺(C₁₋₆alkyl)₂O⁻ , -CO₂H, -SO₃H, -SOC₁₋₆alkyl, -SO₂C₁₋₆alkyl, -C(=O)H, -C(=O)C₁₋₆alkyl, =O, -N(C₁₋₆alkyl)₂, -C(=O)NH₂, -C₁₋₆alkyl, -C₃₋₆cycloalkyl, -C₃₋₆heterocycloalkyl, -Z^{u}C₁₋₆alkyl or -Z^{u}-C₃₋₆cycloalkyl, wherein Z^{u} is defined above.

If the optional substituent represents an oxy moiety to which two optionally substituted hydrocarbyl moieties are attached then optionally substituted R represents an ether moiety. Preferred optional substituents comprise: carboxy, carbonyl, oxy, amino, and/or methoxy.

### Surfactant

The aqueous curable coating compositions may further comprise a surface active agent. It is understood that this may improve the wetting properties of the composition as a coating to the cellular glass insulation material and also adhesion of the composition to the cellular glass insulation material. The surface active agent is preferably present in an amount of 0.01% to 0.5% by weight, more preferably 0.1% to 0.2% by weight. Optionally in one embodiment the surface active agent may be a low foaming surface active agent. Suitable low foaming surface active agents may be selected from those: rated low as determined by the Ross Miles test (ASTM D1173) that produce 5cm or less of initial foam height or break to less than 5 cm in 2 minutes and/or are rated as non-foaming in the high shear test method (ASTM D3519-88) producing 5 cm or less of foam height. It is particularly preferred that the surface active agent is an amphoteric (zwitterionic) surface active agent, such as amino acid, imidazoline and/or betaine type surfactant.

The amphoteric surface active agent may be selected from surface active agents which are pH sensitive, more usefully those that exhibit cationic properties in acidic conditions (low pH). Suitable examples include N-alkyl betaines and/or hydroxyl-imidazolines. Most preferred surface active agents are: alkali metal (preferably sodium) caprylo amphopropionates, such as sodium 3-[2-(2-heptyl-4,5-dihydro-1H-imidazol-1-yl)ethoxy] propionate).

### Particulate filler material

The aqueous coating compositions and coatings described herein contain a particulate filler material. The particulate filler material is typically inert and/or acts as a filler material. The particulate filler material may be generally inert under the conditions of use of the composition (e.g. unreactive with the silicate component (a) or the curing agent (b). The particulate filler material may be a filler, i.e. typically inexpensive compared to the other components of the coating composition described herein.

In a preferred embodiment of the invention, the particulate filler material is fire resistant. Such embodiments are thus eminently suitable for use as a fire resistant coating for surfaces / substrates. Once cured onto the respective surface, coatings formed from such compositions can display a good fire reaction classification. The fire reaction classification may be determined according to the test presented herein. The skilled person will be able to determine the relative amount of fires resistant particulate required in order to impart a good fire reaction classification. Suitable amounts are described below. The particulate may, for example, be an inorganic, mineral or ceramic particulate. Particular examples of particulates include glass (e.g. obtained by milling), clay, sand and volcanic tuff (e.g. Trass).

It is desirable that the particulate filler material be provided in an amount that provides suitable viscosity and shearing resistance of the coating from a given surface to which it is applied. Without wishing to be bound by theory, the applicant has observed that overloading the composition with too much particulate filler material can lead to weaker coatings and / or coatings that are relatively more difficult to handle due to increased viscosity. Irrespective of the nature of particulate filler material, if present it is present in the composition in an amount of 20 to 30% by weight, preferably 22 to 28% by weight and more preferably 24 to 26% by weight based on the total weight of the composition.

The particulate filler material may be dispersed, suspended, dissolved and/or otherwise distributed in the composition. The optional particles, where present, are preferably insoluble in water. In particular embodiments, the particulate filler material is inert to the other components of the aqueous coating composition and/or the insulation substrate material at ambient and curing conditions. Ambient condition as used herein is the temperature and relative humidity of the surrounding air. In this way, the particulate filler material may not chemically react with the other components in the composition, coating or insulation material.

In particular embodiments, the particulate filler material is glass. In further particular embodiments, the particulate filler material is powder from cellular glass. For example, the particulate filler material may include Foamglas^{®} particles. The powder from cellular glass is typically ground to provide the desired particles.

In some embodiments, the filler material has a thermal expansion coefficient in the range of 50-150% of the thermal expansion coefficient of the insulation material, whereby the filler has a bulk density of at least 0.30 kg/dm³.

According to the invention, the particulate filler material has a thermal expansion coefficient in the range of 50-150% of the thermal expansion coefficient of the cell wall material of the cellular glass insulation material.

In an embodiment of the present invention, the thermal expansion coefficient of the filler is at least 55% of the thermal expansion coefficient of the cellular glass insulation material, at least 60%, at least 65%, at least 70%, at least 75%, at least 80%, at least 85%, at least 90%, or more particularly at least 95% of the thermal expansion coefficient of the cell wall material of the cellular glass insulation material.

In an embodiment of the present invention, the thermal expansion coefficient of the filler is at most 145% of the thermal expansion coefficient of the cellular glass insulation material, at most 140%, at most 135%, at most 130%, at most 125%, at most 120%, at most 115%, at most 110%, or more particularly at most 105% of the thermal expansion coefficient of the cell wall material of the cellular glass insulation material.

In a particular embodiment, the particulate filler material has a thermal coefficient in the range of 90 to 110% of the thermal expansion coefficient of the cellular glass insulation material. In further particular embodiments, the particulate filler material has substantially the same thermal expansion coefficient as the thermal expansion coefficient of the cellular glass insulation material. In this way, shearing issues may be avoided, resulting in good compatibility between the coating and the cellular glass insulation material substrate. Such compatibility may be demonstrated by placing the coated cellular glass insulation material in a climate chamber, in which the samples are exposed to climate cycles according to the ETAG004 - norm. In this way, no significant deterioration may occur when both particulate filler and insulation material have the same or similar thermal expansion coefficient.

The thermal expansion coefficient is measurable according to the thermal mechanical analysis known as TMA.

In one embodiment, the filler has a bulk density of at least 0.33 kg/dm³, at least 0.35 kg/dm³, at least 0.38 kg/dm³, at least 0.40 kg/dm³, at least 0.42 kg/dm³, at least 0.44 kg/dm³, at least 0.46 kg/dm³, at least 0.48 kg/dm³, at least 0.50 kg/dm³, or more particularly at least 0.52 kg/dm³.

In one embodiment, the filler has a tap density of at least 0.35 kg/dm³, at least 0.38 kg/dm³, at least 0.40 kg/dm³, at least 0.42 kg/dm³, at least 0.44 kg/dm³, at least 0.46 kg/dm³, at least 0.48 kg/dm³, at least 0.50 kg/dm³, at least 0.52 kg/dm³, at least 0.54 kg/dm³, at least 0.56 kg/dm³, at least 0.58 kg/dm³, or more particularly at least 0.60 kg/dm³.

In the context of the present description, with bulk density is meant the "freely settled" or "poured" density of a particulate material, i.e. the density which is measured without any extra action to compact the material in its container other than pouring the particulate material into the container, usually a cylindrical container carrying volume gradations. This is in contrast with the so-called "tap density", i.e. the bulk density of a particulate material that is measured after submitting the container to a compaction process, usually involving vibration of the container or tapping the container a number of times on a table top, readily 10-20 times, until the particulate material is visually observed to not compact any further.

In particular embodiments, the particulate filler material comprises the same material as the cellular glass insulation material. In a particular embodiment, the particulate filler material is the same material as the cellular glass insulation material.

### Particle size and shape

According to the invention, the particulate filler has an average particle size from 20 to 500 microns, for example from 30 to 250 microns, such as from 50 to 200 microns.

In a particular embodiment the alkali silicate has an average particle size of from 20 to 500 microns, for example of from 30 to 250 microns, such as from 50 to 200 microns. The particles may have a d₉₀ of less than 300 microns.

In another embodiment conveniently the alkali silicate and/or the particle filler material (more conventionally the particular filler material) have a particle size distribution (PSD) such that the average particle size may be any of those values given herein and more conveniently has a mono or bi modal distribution.

In a further embodiment usefully the particulate filler material and/or alkali silicate particles comprise at least 50% by weight of substantially non-spherical particles, such as having a flaked shape, optionally with an aspect ratio (major to minor axis) of at least 1.5, more optionally from 1.5 to 10, and for example with a thickness of about 10 microns.

In particular embodiments, the aqueous coating composition comprises:
(a) 10 to 40 % by weight of an alkali silicate comprising potassium silicate and lithium silicate in amounts of
   5 to 15 % by weight of K₂O;
   0.01 to 1 % by weight Li₂O; and
   5 to 25 % by weight of SiO₂;
   and the weight ratio of SiO₂ to K₂O is at least 1; and
(b) 15 to 60 % by weight of a curing agent; and
(c) 0.1 to 15 % by weight of one or more compounds of Formula 1

   R(OH)ₙ Formula 1

   wherein
   R denotes an optionally substituted C₂₋₆hydrocarbyl or C₂₋₆carbohydrate moiety and n is an integer from 1 to 6; and
(d) 0.02 to 0.8 % by weight of surfactant relative to the total weight of the composition; and
(e) at least 15 % by weight of water;
wherein the % wt amounts are based on the total weight of the aqueous coating composition.

These embodiments of the aqueous coating composition will further comprise a particulate filler material, optionally wherein the particulate filler material is present in an amount of from 20 to 30 wt % relative to the total weight of the composition.

In one embodiment, the aqueous coating composition may comprise:
(a) 10 to 25 % by weight of an alkali silicate comprising potassium silicate and lithium silicate in amounts of:
   5 to 10 % by weight of K₂O;
   0.01 to 0.5 % by weight Li₂O; and
   5 to 15 % by weight of SiO₂;
   and the weight ratio of SiO₂ to K₂O is at least 1,
(b) 20 to 50 % by weight of a curing agent,
(c) 0.1 to 10 % by weight of one or more compounds of Formula 1

   R(OH)ₙ Formula 1

   wherein
   R denotes an optionally substituted C₂₋₆hydrocarbyl or C₂₋₆carbohydrate moiety and n is an integer from 1 to 6;
(d) 0.01 to 0.5 % by weight of surfactant relative to the total weight of the composition; and
(e) at least 15 % by weight of water; and
(f) 20 to 30 % by weight of a particulate filler material,
wherein all % by weight amounts specified are relative to the total weight of the composition.

### Method of making aqueous coating compositions

Aqueous coating compositions described herein may be produced by blending all of the components in the required amount using conventional mixing techniques. It is however particularly preferred initially to formulate a modified silicate composition comprising lithium silicate, potassium silicate, glycerine, the surface active agent and water in the first instance. The modified silicate composition may subsequently be admixed with the curing agent and optionally particulate filler material, preferably wherein the curing agent and particulate filler material are water insoluble. The modified silicate composition may itself be prepared by initially blending together solutions of potassium silicate and lithium silicate (optionally in water) followed by addition of the compound of formula (I) (i.e. the hydrophilic agent, e.g. glycerine) and surfactant. An exemplary method is described in the examples that follow.

### Potassium silicate coating

The potassium silicate coating may comprise 20 to 65 wt.% alkali silicate based on the total weight of the cured coating and the alkali silicate comprises potassium silicate. In particular embodiments, the coating includes 20 to 65 wt.% alkali silicate comprising potassium silicate and lithium silicate. In further embodiments, the potassium silicate coating comprises 20 to 65 % by weight of a silicate component comprising potassium silicate and lithium silicate in amounts of 10 to 32 % by weight of K₂O, 0.05 to 1 % by weight Li₂O, and 10 to 32 % by weight of SiO₂, the weight ratio of SiO₂ to K₂O is at least 1, where all % by amounts are based on the total weight of the potassium silicate coating.

In some embodiments, the potassium silicate coating is obtained by or obtainable by curing an aqueous coating composition as describe herein.

In particular embodiments, the potassium silicate coating is obtained by or obtainable by curing an aqueous coating composition, the composition comprising:
(a) 10 to 40 wt.% of the alkali silicate, the alkali silicate comprising potassium silicate; and
(b) 15 to 60 wt.% of the curing agent; and
(c) at least 15 wt.% of water;

Wherein the % weight amounts are based on the total weight of the aqueous coating composition.

In more particular embodiments, the potassium silicate coating is obtained by or obtainable by curing an aqueous coating composition, the composition comprising:
(b) 10 to 40 % by weight of an alkali silicate comprising potassium silicate and lithium silicate in amounts of
   5 to 15 % by weight of K₂O;
   0.01 to 1 % by weight of Li₂O; and
   5 to 25 % by weight of SiO₂;
   and the weight ratio of SiO₂ to K₂O is at least 1; and
(b) 15 to 60 % by weight of a curing agent; and
(c) 0.1 to 15 % by weight of one or more compounds of Formula 1

   R(OH)ₙ Formula 1

   wherein
   R denotes an optionally substituted C₂₋₆hydrocarbyl or C₂₋₆carbohydrate moiety and n is an integer from 1 to 6; and
(d) 0.02 to 0.8 % by weight of surfactant; and
(e) at least 15 % by weight of water;
wherein the % wt amounts are based on the total weight of the aqueous coating composition.

The aqueous coating composition of these embodiments of the potassium silicate coating further comprises a particulate filler material, optionally wherein the particulate filler material is present in an amount of from 20 to 30 wt % relative to the total weight of the composition.

In one embodiment, the potassium silicate coating is obtained by or obtainable by curing an aqueous coating composition, the composition comprising:
(a) 10 to 25 % by weight of a silicate component comprising potassium silicate and lithium silicate in amounts of:
   5 to 10 % by weight of K₂O;
   0.01 to 0.5 % by weight of Li₂O; and
   5 to 15 % by weight of SiO₂;
   and the weight ratio of SiO₂ to K₂O is at least 1,
(b) 20 to 50 % by weight of a curing agent,
(c) 0.1 to 10 % by weight of one or more compounds of Formula 1

   R(OH)ₙ Formula 1

   wherein
   R denotes an optionally substituted C₂₋₆hydrocarbyl or C₂₋₆carbohydrate moiety and n is an integer from 1 to 6;
(d) 0.01 to 0.5 % by weight of surfactant relative to the total weight of the composition; and
(e) at least 15 % by weight of water; and
(f) 20 to 30 % by weight of a particulate filler material,
wherein all % by weight amounts specified are relative to the total weight of the composition.

In some embodiments, the potassium silicate coating has a substantially uniform surface. In some embodiments, the coating may have a surface roughness less than the surface roughness of the surface of the cellular glass insulation material on which the coating is situated. More particularly, the coating may occupy and/or fill opened surface cells of the cellular glass insulation material. In this way, the coating may provide a good finish to the insulation material.

Curing can be achieved by any means known to the art, for example, by mixing components that inherently trigger a chemical reaction, thermally, or by irradiation (e.g. by ionising radiation optionally in the presence of initiators). Curing, as described above, may be employed to obtain the potassium silicate coating.

Volatile components in the aqueous coating composition (e.g. certain compounds of Formula I described herein), when present, may evaporate during or after curing. These components may not be incorporated into the potassium silicate coating. Other components in the aqueous coating composition (e.g. certain particulate filler material described herein), when present, will remain in the composition after curing. These components may be incorporated into the potassium silicate coating.

Additionally, the potassium silicate coating and coating compositions may be used as a cellular glass adhesive.

The additional and alternative features described herein with respect to the aqueous coating composition may also be additional and alternative features of the potassium silicate coating, where compatible.

### Cellular Glass Insulation Material

The coating described herein is on an upper surface of a cellular glass insulation material (also referred to as a "cellular glass insulation material substrate", "insulation material substrate" or "substrate"). The insulation material substrate is a cellular glass insulation material substrate, also known as glass foam material (e.g. FOAMGLAS^{®} material). This insulation material is, factory made, compliant with standards EN 13167, EN 14305, ASTM C552. Cellular glass may readily offer a thermal conductivity of less than 0.065 W/m.K, a compressive strength of at least 0.4 N/mm², and complies with a class A1-fire reaction, meaning it is non-combustible.

The insulation material typically has a closed cell structure. In other words, the insulation material substrate includes a number of cells comprising cell walls of insulation material and cell interiors of a different material. Typically, the cell interiors are composed of a gas, such as air, N₂ and/or CO₂. At the surface of a closed cell structure insulation material substrate, the substrate may include open cells. The open cells may be formed from part of a closed cell. For example, the open cells may be created where a closed cell is formed and then the substrate is cut through the closed cell to form the surface.

Alternatively, the open cell may be formed where there is insufficient cell wall insulation material to form a closed cell. When the insulation material substrate includes open cells at the coated surface, the coating may occupy some or all of the open cell structure on the surface. In this way, satisfactory adhesion of the coating and the insulation material substrate may be provided.

In another embodiment, the insulation material substrate has a cellular structure with an average cell diameter in the range of 0.1-5.0 mm, preferably at least 0.2 mm, more preferably at least 0.3 mm, even more preferably at least 0.4 mm, yet more preferably at least 0.5 mm. In an embodiment the average cell diameter is at most 4.0 mm, preferably at most 3.0 mm, more preferably at most 2.5 mm, even more preferably at most 2.0 mm, yet more preferably at most 1.7 mm.

The applicants determine the average cell diameter d of a cellular product according to the following procedure. A sample comprising a 10 x 10 cm area of the surface to be coated should be taken from the insulation material. The sample should be taken from the centre of the insulation material, i.e. at maximum distance of each border.

The cells of the foamed product are about spherical when they are formed, ideally taking a tetrakaidecahedral form, i.e. a regular 3D shape delimited by 8 hexagonal face and 6 quadrilateral faces.

When the cell is cut, its cross-section would be about circular. Several effects during the insulation material manufacturing process, may result in elongation or deformation of the cells in one or more directions. The cell cross sections may thus deviate from about circular, forming a shape with a longer axis being perpendicular to a shorter axis.

Cell diameters should be measured on the surface to be coated, preferably under a microscope, with an optical magnification of at least 20x. In such a microscopic view or picture, when in doubt, may be determined an average cell diameter in a first direction giving about the highest diameter, and the average cell diameter in a second direction which is perpendicular to the first direction. A ratio of the two average cell diameters may then be determined by dividing the smallest average cell diameter by the largest one.

In the context of the present invention, the average cell diameter d of a sample of cellular glass material should be determined in a plane coinciding with the surface to be coated. The average cell diameter "d" should be determined by counting how often a section of a straight line of at least 3.0 cm long crosses a cell wall on a microscope picture. If the microscope picture is not large enough to host a 3.0 cm line section, several microscope pictures may need to be stitched together using appropriate software in order to obtain a microscopic picture representing a cellular ceramic sample of at least 3.0 cm long. The average cell diameter is then computed using formula (I): $d = L / \left({0.785}^{2}*N\right) = L / \left(0.616*N\right)$ (I) wherein
d is the average cell diameter (in mm, with 10 micrometers significance or better)
L is the length of the line section crossing the cell walls in the microscope picture (expressed in mm, but measured to an accuracy of 10 micrometers or better), and
N is the number of times the line section intersects cell walls along its length L. In the context of the present invention, this number should be at least 40, else a longer line needs to be selected, or additional measurements (additional lines whose intersections are counted) need to be performed on another part of the sample that has no cells in common with the first line(s).

The factor 0.785 is computed as the rounded result of π / 4, conform what is described in Appendix X1 of ASTM D3576-15, i.e. the relation between the average chord length and the average cell diameter. The factor 0.616 is the square of the factor 0.785 rounded to the same precision.

In the context of the present invention, a cell wall is defined as the material boundary separating two cells. However, bubbles may be present in a cell wall. If a line crosses a bubble, the cell wall surrounding the bubble should be counted as one cell wall, not two. A cell is therefore defined in the context of the present invention as a void having more than 3 neighbours. A cell usually has a non-spherical geometry, because "corners" are formed where three cells meet each other. Ideally the shape of a cell is a tetrakaidecahedron, or related. A bubble has only 3 or less neighbours and is typically almost fully spherical or ellipsoid in shape, usually having no "corners".

For elongated cells, the cell may be conceived as an ellipsoid rather than a sphere. The measurement stated above should be performed in two directions: once along the predominant long axis of the cells, and once along the predominant short axis of the cells. Applying formula (I) will give the length of the long axis (a) for the former measurement, and the length of the ellipsoid short axis (b) for the latter. An equivalent circular diameter can then be computed as $d = √ \left(a*b\right)$

Typically, this measurement is repeated at least once, more particularly at least twice, even more particularly at least three times, yet more particularly at least 5 times on the same surface of the sample, the line sections being drawn at different locations on the sample surface, at least 2 * d (with d as defined in formula I) apart from each other. The inventors typically work with a sample having a 10 x 10 cm surface area of the surface to be coated. The inventors typically divide the sample surface to be used for the cell diameter determination into 9 areas of about the same size by drawing a rectangular raster on the surface which divides each surface border in 3 parts of about the same size. The single central area is then labelled A, the 4 side areas bordering the area A are labelled B, and the 4 remaining corner areas are labelled C. The inventors typically draw one line section having the length L in each of the 9 areas. The inventors typically use all 9 measurements. For simplicity, the measurements for areas A and B may be used, or if sufficiently differentiating the result for area A only, but the inventors consider the combination of the 9 measurements as the ultimately governing result. The individual results dᵢ of each of the n individual measurements should then be averaged mathematically over all n measurements, in order to obtain the average cell diameter d for the sample.

In some embodiments, the insulation material substrate has a solid space representing at least 2% and at most 10% of the slab volume, preferably at least 3%, more preferably at least 4%. In one embodiment, the insulation material substrate has a solid space representing at most 9% of the slab volume, particularly at most 8%, more particularly at most 7% and even more particularly at most 6%. The applicants have found that limiting the solid space of the insulation to at most the upper limit as specified, contributes to the excellent insulating properties of the insulation material substrate.

### Method of producing the coated insulation material

The method of producing the coated cellular glass insulation material as described herein is not particularly limited.

For example, a method of producing a coated cellular glass insulation material may comprise the steps of:
(i) Providing an aqueous coating composition as described herein;
(ii) Applying the composition to at least one surface of a cellular glass insulation material substrate; and
(iii) initiating curing of the composition.

The above method may lead to good adhesion between the resulting insulation material coating and the insulation material substrate.

Steps (ii) and (iii) of may be performed sequentially or simultaneously. The method may be part of a continuous process or a batch process.

In some embodiments, steps (ii) and (iii) are performed sequentially in a continuous process, with step (ii) occurring before step (iii) in the process.

The composition may be applied in step (ii) in any suitable way. For example, the composition may be applied by a method selected from spraying, roller coating, scraping, submerging, and the waterfall method.

Step (iii) may include drying the coating on the insulation material substrate at a temperature in the range of 20 to 100 °C. In some embodiments, the coating is dried at a temperature in the range of 40 to 80 °C. In a particular embodiment, the coating is dried at a temperature in the range of 50 to 70 °C. In a further embodiment, the coating is dried at a temperature of about 60 °C.

The drying step may be particularly performed for a sufficiently long time period for obtaining a substantially full curing of the coating. For instance, drying at 16°C may be performed for a period of in the range of 3 to 6 hours. Drying at 20°C may be performed for a period in the range of 2.5 to 6 hours.

Drying at 40°C may be performed for a period in the range of 60 to 120 minutes. Drying at 60°C may be performed for a period of in the range of 30 to 90 minutes. Drying at 80°C may be performed for a period in the range of 15 to 60 minutes. Drying at 100°C may be performed for a period in the range of 2 to 30 minutes. In a particular embodiment, the drying step is performed around 60°C for at least 60 minutes and optionally up to about 90 minutes. In this way, the composition may be sufficiently cured, provide a satisfactory finish to the coating and may be an acceptable time period for the industrial production process.

The drying of the coating may be performed in a drying tunnel. The drying may include applying infrared radiation to the surface of the insulation material substrate coated with the composition.

In some embodiments, step (ii) is performed at least twice. In a particular embodiment, step (ii) is performed twice. In these embodiments, step (ii) may be performed at least twice before step (iii) is performed or step (ii) may be repeated after step (iii) is performed for the first time. The composition form the first application may be at least partially cured before the second or subsequent application of the composition to the insulation material substrate. In this way, the insulation material substrate may have a surface with two layers of the potassium silicate coating.

In some embodiments, the coated insulation material resulting from the method described herein is maintained under controlled conditions of temperature and/or relative humidity for a period of time to allow for curing to continue.

In some embodiments, the method further comprises a step of washing the coated insulation material after step (iii). The step of washing may use water to wash the coated insulation material. The water may have a pH in the range of 6 to 8.

Alternatively, a method of producing a coated cellular glass insulation material may comprise the steps of:
(i) Providing an aqueous coating composition as described herein;
(ii) initiating curing of the composition to form a potassium silicate coating; and then
(iii) applying the potassium silicate coating to at least one surface of a cellular glass insulation material substrate.

In these alternative embodiments, an adhesive may be included between the potassium silicate coating and the cellular glass insulation material substrate.

In some embodiments, the methods described herein further comprise a step of painting, varnishing, applying enamel and/or applying tiles to the coating of the coated insulation material.

Curing can be achieved by any means known to the art, for example, by mixing components that inherently trigger a chemical reaction, thermally, or by irradiation (e.g. by ionising radiation optionally in the presence of initiators). Curing, as described above, may be employed in these methods of producing the coated insulation material.

Volatile components in the aqueous coating composition (e.g. certain compounds of Formula I described herein), when present, may evaporate during or after curing. These components may not be incorporated into the insulation material coating of the coated insulation material. Other components in the aqueous coating composition (e.g. certain particulate filler material described herein), when present, will remain in the composition after curing. These components may be incorporated into the insulation material coating of the coated insulation material.

The additional and alternative features described herein with respect to the aqueous coating composition and potassium silicate coating may also be additional and alternative features of the method of producing the coated cellular glass insulation material, where compatible.

### Roof deck

The inverted roof includes a roof deck, sometimes referred to as the structural deck. The roof deck typically provides the platform on which the waterproofing layer and insulation layer of the inverted roof is installed. Typically the roof deck is concrete slab. However, wooden and metal roof decks may be used.

### Waterproofing layer

The inverted roof includes a waterproofing layer located between the roof deck and the cellular glass insulation layer. Waterproofing layers suitable for inverted roofs are known *per se,* and any known inverted roof waterproofing layer may be used. Commonly used waterproofing layers include reinforced bitumen membranes (RBMs), single-ply membranes, liquid applied membranes and hot melt monolithic waterproofing.

Reinforced bitumen membranes RBMs require a two-layer application. They can be-fully bonded or loose-laid. The thickness of the RBM may be in the range of 6 to 8mm. Single-ply membranes may have a thickness in the range of 1.2 to 2mm. They are usually loose-laid, and joints are hot-air-welded. Single ply-membranes may require a screed to falls. Liquid-applied membranes may have a thickness in the range of 1.2 to 2mm. They are typically fully bonded. Liquid-applied membranes typically need a two-coat application. Hot melt monolithic membranes may have a thickness in the range of 8 to 10 mm. They are typically fully bonded to a primed substrate. A two-coat application is typical. In certain embodiments, the waterproofing layer is a hot melt monolithic membrane.

The waterproofing layer is positioned between the roof deck and the insulation layer. The waterproofing is typically positioned on an upper surface of the roof deck. The waterproofing layer may be applied or laid directly onto the surface of the roof deck. Alternatively, the waterproofing layer may include one or more interstitial layers between the roof deck and the waterproofing layer. For example, a primer layer may be positioned between at least part of the roof deck surface and the waterproofing surface. Such a primer layer may help with adhesion of the waterproofing layer to the roof deck.

The inverted roof may include two or more waterproofing layers positioned between the roof deck and the insulation layer.

### Roof ballast

The inverted roof may further include roof ballast positioned directly or indirectly abutting the upper surface of the cellular glass insulation layer. In other words, the roof ballast may be positioned on top of the cellular glass insulation layer. In this way, the cellular glass insulation layer may be weighed down and/or substantially fixed by the roof ballast.

Roof ballasts suitable for use in inverted roofs are known *per se,* and a suitable inverted roof ballast may be selected. Roof ballasts, for example, may be concrete, stone or other paving slabs or gravel ballasts.

Alternatively, the roof ballast may be a raised floor access or pedestals with a floor finishing. Such roof ballast may be used for balconies, accessible areas, pedestrian walkways.

### Water flow reduction layer

The inverted roof may include one or more water flow reduction layers. The water flow reduction layer (WFRL) may be added on top of the insulation. The WFRL minimizes the water flowing through the insulation to the roof deck surface.

The water flow reduction layer or layers may be positioned on top of the cellular glass insulation layer. In other words, the one or more water flow reduction layers may be positioned on top of the protective coating of the uppermost layer of the cellular glass insulation layer. Additionally or alternatively, one or more water flow reduction layers is positioned between the cellular glass insulation layer and the roof deck. In some embodiments, the water flow reduction layer or layers may be between the cellular glass insulation layer and the waterproofing layer.

An example of a water flow reduction layer includes but is not limited to XENERGY MK available from Dow Chemical Company.

### Drainage layer

The inverted roof may include one or more drainage membranes. The drainage membrane may be, for example, a rubber crumble or a drainage membrane with a geotextile. Non-limiting examples of a drainage layer include ENKADRAIN^{®}, part of the Enka^{®} Solutions range available from Low & Bonar^{®}, Delta^{®}-Floraxx Top available from Dörken.and the Bauder Pro-mat available from Bauder.

The drainage membrane or membranes may be positioned on top of the cellular glass insulation layer. In these embodiments, the drainage membrane may protect the upper surface of the cellular glass insulation layer, for example from penetration of gravel roof ballast

In certain embodiments, the inverted roof includes a drainage membrane and a water flow reduction layer. In these embodiments, the water flow reduction layer may be positioned on top of the cellular glass insulation layer and the drainage membrane may be positioned on top of the water flow reduction layer.

Additionally or alternatively, the inverted roof includes one or more drainage layers beneath the cellular glass insulation layer. In these embodiments, the drainage membrane may be to ensure water is drained and not stagnating underneath the insulation.

### Method of installing the inverted roof

The present invention also provides a method of installing an inverted roof, the method comprising the steps of:
- installing a waterproofing layer to a roof deck; and then
- installing a cellular glass insulation layer to the waterproofing layer and roof deck so that the waterproofing layer is positioned in between the roof deck and the cellular glass insulation layer;
the cellular glass insulation layer comprising one or more layers of cellular glass insulation material and wherein the cellular glass insulation material located at the upper face of the cellular glass insulation layer includes a protective coating on an upper surface of the cellular glass insulation material, and wherein the protective coating comprises an alkali silicate and a particulate filler having an average particle size from 20 to 500 microns, and wherein the thermal expansion coefficient of the particulate filler is within the range of 50 to 150% of the thermal expansion coefficient of the cell wall material of the cellular glass insulation material.

The additional and alternative features described herein with respect to the inverted roof are also additional and alternative features of the method of installing the inverted roof.

The features disclosed in the foregoing description, or in the accompanying drawings, expressed in their specific forms or in terms of a means for performing the disclosed function, or a method or process for obtaining the disclosed results, as appropriate, may, separately, or in any combination of such features, be utilised for realising the inverted roof or method of installing it, within the limits defined by the claims.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the claims.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### TEST METHODS

Unless otherwise indicated all the tests herein are carried out under standard conditions as also defined herein.

### Particle Size

Particle sizes and particle size distributions as referred to herein are by weight and are determined using a Malvern Mastersizer 2000 equipped with the sample dispersion unit 25 Hydro 2000S (supplied by Malvern Instruments Ltd., UK).

### Standard (or Ambient) Conditions

As used herein, unless the context indicates otherwise, standard or ambient conditions as used herein means, atmospheric pressure, a relative humidity of 50% ±5%, ambient temperature (22°C ±2°) and, if an air flow is present, an air flow of less than or equal to 0.1m/s. Unless otherwise indicated all the tests herein are carried out under standard conditions as defined herein.

### Water Absorption

For each coating composition to be tested three 200x200 mm specimen are prepared of a cellular glass panel substrate (available under the trademark Foamglas^{®}) coated with the coating composition to be tested (further details of the coating may be provided in the tables and examples herein). These specimen are then tested (@+23°C) for initial, short term and long term water absorption by partial immersion in accordance with EN1609, method B (with deduction of initial water uptake if less than 0.5 kg/m²). The initial mass at the start of the test (denoted m₀) is determined and then the test specimen is placed in a water bath in such position that the side coated with the coating composition to be tested is partially immersed in water with the bottom face of the test specimen 10 ±2 mm below the water level. After 10 s, the test specimen was removed from the bath, held horizontally and within 5 seconds placed in a plastic tray of known mass. This allows the initial uptake of water (denoted m₁) to be determined. The test specimen was again placed in the water bath, partially immersed (to a depth of 10 ±2 mm). The water level was kept at a constant level during this test. After 24 hours the test specimen was removed from the bath and the mass of water absorbed after 24 hours (m₂₄) determined which provides the short term water absorption (Short term WA). After 28 days the long term water absorption (Long term WA) may also be determined in a similar manner by partial immersion in accordance with EN 12087, method B. Data generated from this test is provided in the tables and examples herein.

The data in table 9 show that the coating compositions of the protective coating of the inverted roof of the invention resist water absorption providing a good potassium silicate coating and thus improving the weather resistance of the cellular glass panels on which they are coated.

### Fire Behaviour / Fire Resistance

To evaluate the behaviour of coatings when subject to fire, coated specimens are cut from samples of coated substrates of size 90 mm wide x 190 mm long. The test specimens have a maximum thickness of 60 mm with a minimum of 6 specimens being used for each exposure condition tested. The test specimens are subjected to the single-flame-source test (ISO 11925-2 2010) for determining the ignitability of products by direct small flame impingement under zero impressed irradiance using vertically oriented test specimens. The test is performed inside a test chamber with the vertically mounted test specimen subjected to edge and surface exposure from a gas flame for 15 seconds, after which the flame is removed and the test is continued to observe any resultant ignition. Results from these tests are given herein in table 10. Most of the substrates to which the coating is applied are known cellular glass panels which are typically fire resistant when uncoated.

The term "fire resistant" as used herein denotes that the coated specimen prepared from a coating and tested as described above is deemed to have passed the criteria set out in ISO 11925-2 2010 which are that during the duration of the test either no ignition occurs; or if ignition occurs the flame tip does not reach 150 mm above the flame application point on the specimen and no burning droplets are produced. For non-coated materials (such as precursor curable coating compositions and/or components thereof) "fire resistant" as used herein denotes that when said material is used as a coating or component thereof to form a coated specimen tested as described above, the coated specimen is or remains fire resistant (e.g. if the uncoated substrate is already fire resistant in the same test). Fire resistance may be due to the inherent properties of the fire resistant material and/or how the material is incorporated into a protective coating to impart fire resistance. Uncoated cellular glass is known to have a high degree of fire resistance.

The data below show that certain tested coating compositions of the invention are fire resistant.

Fire behaviour of the assembly was tested in accordance with industry standards EN 13820:2003, EN ISO 1716:2010 and EN ISO 1182. The results obtained following EN ISO1716 all resulted in a classification of "non combustible" in accordance with class A according to EN 13501-1 and EN ISO 1182 and EN ISO 1716.

### Solar radiation resistance (UV testing)

A test specimen of the assembly measuring 300 x 200 x 50 mm) was subjected to a UV-aging test in a QUV-SPRAY apparatus (UVA-lamps, 60 minutes light, 9 minutes light plus rain, air-temperature +50°C), to evaluate the weathering (UV+Rain) resistance.

### EXAMPLES

Some aspects of the inverted roof of the invention will be illustrated with reference to the following non-limiting Examples.

### Example 1

The production of an aqueous coating composition suitable to form a protective coating for use in the inverted roof of the present invention was performed employing a multi stage process. This example describes the first step. In the first stage, a silicate composition (Ex 1) was produced from the following ingredients shown in Table 1. In particular, a composition containing 90.7% silicate component and 9.3% water was provided. The 90.7% silicate component was composed of the relative amounts of K₂O, Li₂O and SiO₂ in the dry mass weights shown in table 1.

**Table 1**

| Ingredient (trade name) | K₂O % wt | Li₂O wt % wt | SiO₂ wt % wt | Tot dry solids (DS) | Mole ratio (MR) (M₂O to SiO₂) | Water % wt |
|---|---|---|---|---|---|---|
| Ex 1 (silicate comp.) | 19.2% | 0.2% | 25.5% | 45.0% | 2.01 | Balance to 100% |

Where M₂O denotes Li₂O and K₂O, and molecular weight of K₂O is 94.2, Li₂O is 29.88 and SiO₂ is 60.08.

### Example 2

This example describes the second stage of the multi-step process mentioned in example 1. In the second stage, to the above silicate composition (Ex 1) additional organic components were added (4.7 % weight of glycerine and 0.6 % weight of sodium capryloamphopropionate available commercially from Croda under the trade name Crodateric^{™} CYAP-LQ-(AP) also known as CYAP) as shown in Table 2, to form a modified silicate composition (referred to as "Ex 2"). Water content is not expressly described in the table below but it will be appreciated that the remaining weight balance of the components in the composition is made up by water.

**Table 2**

| Ingredient | Relative Ratio | % wt of total ingredients | | | | | Total dry solids (DS) | MR (SiO₂ / M₂O) |
|---|---|---|---|---|---|---|---|---|
| | | K₂O | Li₂O | SiOz | Glycerine | Crodateric^{™} | | |
| Ex 1 (mod sil.) | 94.7% | 19.2 | 0.2 | 25.5 | - | - | 45.0% | 2.01 |
| Glycerine | 4.7% | - | - | - | 85.6 | - | 85.6% | |
| CYAP | 0.6% | - | - | - | - | 45.0% | 45.0% | |
| Ex 2 | 100.0% | 18.2% | 0.2% | 24.2% | 4.0% | 0.3% | 46.9% | |

### Example 3

Coating compositions "Ex 3.1 and 3.2" (also referred to below as "modified silicate") made as described herein were produced by adding to the composition of Ex 2 curing agent (Fabutit^{®}) and particulate material (ground powder cellular glass). The relative amounts of the respective components in the resulting composition Ex 3.1 and Ex 3.2 are described below in table 3.

**Table 3**

| | Ex 3.1 | Ex 3.2 |
|---|---|---|
| Modified silicate | wt/% | wt/% |
| Ex 2 | 47 | 50 |
| Fabutit^{®} 206 | 19 | 30 |
| Fabutit^{®} 748 | 9 | 0 |
| Filler | 25 | 20 |
| Total | 100 | 100 |

Where Fabutit^{®} 206 (79% P₂O₅ and 20% Al₂O₃); Fabutit^{®} 748 (60% P₂O₅ and 36% Al₂O₃); Filler denotes particulate glass material from the production of Foamglas^{®} panels and has a particulate size distribution shown in Figure 2.

The resulting % wt amounts of the independent components are as shown below in table 4.

**Table 4**

| | Ex 3.1 | Ex. 3.2 |
|---|---|---|
| Component | Weight % | |
| SiOz | 11.37% | 12.10% |
| K₂O | 8.54% | 9.10% |
| Li₂O | 0.11% | 0.10% |
| Glycerine | 1.90% | 2.00% |
| Crodateric^{™} CYAP-LQ-(AP) | 0.12% | 0.15% |
| Water | 24.96% | 26.55% |
| Fabutit^{®} 206 | 19.00% | 30.00% |
| Fabutit^{®} 748 | 9.00% | 0 |
| Filler | 25.00% | 20.00% |
| Total | 100.00% | 100.00% |

In Example 3.1 the SiO₂ / K₂O mass ratio is 1.33 and SiO₂ / M₂O mass ratio is 1.31 (where M₂O = K₂O + Li₂O).

The resulting coating formulation was applied to slabs of cellular glass available under the trade mark Foamglas^{®} T4+ to form an even coating thereon and then cured. The amount of the composition applied to the slab was such as to provide an average thickness of coating after drying and curing as specified in the respective Tables below (typically 1.5 mm or 3 mm). All samples showed good binding/tensile strength (since all failures have been found to occur in the Foamglas^{®} substrate rather than the coating.

Compressive strength testing of the slabs coated with the coating composition of Example 1 gave average values above 600 kPa which indicates that the compressive strength of coating is stronger than the slabs.

### Examples 4 and 5

Besides the coating formulation of Ex 3, mixtures have been made with two modified formulas (Ex 4 and Ex 5) for which part of the Fabutit^{®} curing agent has been replaced by TRAS (finely crushed volcanic rock). The coating composition is easy to apply and shows a self-levelling effect. By slightly changing the formula of Ex 3.1 and adding about 5% TRAS in place of the corresponding amount of Fabutit^{®} curing agent, the composition could be applied to the cellular glass surface. Samples were prepared with different average coverages ranging between 1 kg/m² (about 0.6 mm) and 2.4 kg/m² (about 1.5 mm). Most of the samples were cured at lab ambient conditions (about +23°C and 50% RH), but some were subjected to accelerated curing, by placing them immediately after application to the cellular glass surface in an oven at +40°C.

### PERFORMANCE DATA (Examples 1 to 5)

### Water absorption

The results in the following table (Table 5) show that a potassium silicate protective coating as described herein provides a coating which resists water absorption as shown by the measurement of short and long term water absorption (WA) by partial immersion of the different Foamglas^{®} samples coated with coating compositions as described herein.

**Table 5**

| Sample | Ageing | Average short term WA (kg/m²) (n=3) | Average long term WA (kg/m²) (n=3) |
|---|---|---|---|
| 1.5 mm thick coat of Ex 3.1 | aged at lab ambient | 0.13 kg/m² | 0.30 kg/m² |
| 3 mm thick coat of Ex 3.1 | aged at lab ambient | 0.14 kg/m² | 0.36 kg/m² |
| 1.5 mm thick coat of Ex 3.1 | thermal ageing in PVP | 0.15 kg/m² | 0.31 kg/m² |
| 3 mm thick coat of Ex 3.1 | thermal ageing in PVP | 0.20 kg/m² | 0.37 kg/m² |

### Fire resistance

The results in the following table (Table 6) show that a coating of the invention imparts fire resistance to Foamglas^{®} samples coated with coating compositions as described herein.

**Table 6**

| Reaction to Fire Test (EN ISO 11925-2, 2010) edge exposure (n=3) (coating Ex 3.1) | | |
|---|---|---|
| | Edge exposure | Surface exposure |
| Flame application time | 15 s | 15 s |
| Burning droplets | No | No |
| Height burnt cone | 1 cm | 3 cm |

The coating can classify as an A fire classification according to the European norm EN 13501-1 as shown by the results in Table 7.

**Table 7**

| | A | B |
|---|---|---|
| Coating composition used | Ex 3.1 | Ex 3.2 |
| △T (°C) | 8.9 | 3.7 |
| t_{f} (s) (4) | 0 | 0 |
| PCS (MJ/kg) | 0.2378 | 0.2378 |

### Solar radiation resistance (UV testing)

A test specimen of foamglas^{®}T4+ substrate with a coating according to Ex 3.1 measuring (300 x 200 x 50 mm) was subjected to a UV-aging test in a QUV-SPRAY apparatus (UVA-lamps, 60 minutes light, 9 minutes light plus rain, air-temperature +50°C), to evaluate the weathering (UV+Rain) resistance. After a complete test run of 220 cycles the coated sample was inspected visually for its condition (discolouring, cracks, shear). No visual or physical defects were observed.

### Example 6

A coating having 47 % by weight of the modified waterglass of Example 1, 28 % by weight Fabutit (19 % Fabutit 206 and 9% Fabutit 748); and 25 % scrap particulate FOAMGLAS T3+ and being around 1.5 mm thick (~2.4 kg/m²) was formed on a surface of 80 mm thick slabs of FOAMGLAS^{®} T3+.

After a 4 week curing and ageing period, the samples of coated cellular glass insulation material were tested in a climatic test chamber designed to run thermal cycles in accordance with the Guideline for European Technical Approval of External Thermal Insulation Composite Systems with Rendering" (ETAG 004).

The thermal cycling consisted of three cycles in the order given:
1. 80 heat-rain cycles consisting of:
   a. heating to +70°C in 1 hour and maintaining at 70°C for 2 hours;
   b. followed by a water spray of 1 litre/m²min during 1 hour and a 2 hour drainage period;
2. Then: 5 heat-cold cycles consisting of:
   a. heating to +50°C in 1 hour and maintaining at 50°C for 7 hours;
   b. followed by a cool down to -20°C in 2 hours and maintaining the -20°C for 14 hours;
3. Then: 30 wetting, freezing & thawing cycles in accordance with the EN16383, namely, conditioning of the test wall initially by wetting for 8 hours with an amount of (1.5 ± 0.5) litre/(m² minute) water with a temperature of (15 ± 5) °C; and then starting 30 cycles consisting of the following:
   a. freezing the surface of the samples within at least 2 h to (-20 ± 5) °C and maintain it for 4 hours (in total, 6 hours maximum);
   b. thawing the samples for 1 hour at temperature of (20 ± 5) °C;
   c. wetting the samples for 1 hour with an amount of (1.5 ± 0.5) litre/(m² minute) water with a temperature of (15 ± 5) °C.

### Results

After the thermal cycling program (including the severe wetting, freezing and thawing cycles), the test samples were examined. The coating did not show shear failures.

The edges of the samples where the FOAMGLAS^{®} was uncoated clearly suffered clearly from freeze & thaw cycling and showed a crumbly surface with a limited rigidity. When trimming off 1 cm of the edges we observed that the freeze & thaw cycling resulted in cracking of the cells so that the moisture could enter systematically deeper and deeper in the FOAMGLAS^{®}.

The alkali silicate coating however was still strong and rigid and showed no signs of crumbling on the surface.

## Claims

1. An inverted roof comprising:
a roof deck (E), a cellular glass insulation layer (C) and a waterproofing layer (D); and wherein
the roof deck (E) supports the waterproofing layer (D) and cellular glass insulation layer (C);
the waterproofing layer (D) is positioned between the roof deck (E) and the cellular glass insulation layer (C); and
the cellular glass insulation layer (C) comprises one or more layers of cellular glass insulation material (B) and the uppermost layer of cellular glass insulation material (B) includes a protective coating (A) on its uppermost surface, such that the protective coating forms an upper face of the cellular glass insulation layer (C),
wherein the protective coating (A) comprises an alkali silicate, and a particulate filler having an average particle size from 20 to 500 microns,
and wherein the thermal expansion coefficient of the particulate filler is within the range of 50 to 150% of the thermal expansion coefficient of the cell wall material of the cellular glass insulation material (B).

2. The inverted roof according to claim 1 wherein the protective coating comprises 20 to 65 wt.% alkali silicate based on the total weight of the coating and the alkali silicate comprises potassium silicate.

3. The inverted roof according to claim 2 wherein the protective coating includes 20 to 65 wt.% alkali silicate comprising potassium silicate and lithium silicate.

4. The inverted roof according to any one of the preceding claims wherein the protective coating further comprises a curing agent.

5. The inverted roof according to claim 4 wherein the curing agent comprises aluminium phosphate.

6. The inverted roof according to any preceding claim wherein the particulate filler material is present in an amount of from 20 to 40 wt % relative to the total weight of the coating.

7. The inverted roof according to any preceding claim wherein the particulate filler material has a bulk density of 0.3 kg/dm³.

8. The inverted roof according to any one of the preceding claims wherein the particulate filler material has substantially the same thermal expansion coefficient as the cellular glass insulation material (B).

9. The inverted roof according to any one of the preceding claims wherein the protective coating comprises:
(a) 20 to 65 % by weight of an alkali silicate comprising potassium silicate and lithium silicate in amounts of
10 to 32 % by weight of K₂O;
0.05 to 1 % by weight Li₂O; and
10 to 32 % by weight of SiO₂;
and the weight ratio of SiO₂ to K₂O is at least 1; and
(b) 20 to 40 % by weight of a particulate filler material;
where all % by amounts are based on the total weight of the potassium silicate coating.

10. The inverted roof according to any one of the preceding claims wherein the protective coating is formed by curing an aqueous coating composition comprising alkali silicate and a curing agent, wherein the aqueous coating composition comprises:
(a) 10 to 50 wt.% of the alkali silicate, the alkali silicate comprising potassium silicate; and
(b) 15 to 60 wt.% of the curing agent; and
(c) at least 15 wt.% of water;
wherein the % wt amounts are based on the total weight of the aqueous coating composition.

11. The inverted roof according to the claim 10 wherein the aqueous coating composition comprises:
(a) 10 to 40 % by weight of the alkali silicate comprising potassium silicate and lithium silicate in amounts of
5 to 15 % by weight of K₂O;
0.01 to 1 % by weight of Li₂O; and
5 to 25 % by weight of SiOz;
subject to the proviso that the weight ratio SiO₂ to K₂O is at least 1; and
(b) 15 to 60 % by weight of the curing agent; and
(c) 0.1 to 15 % by weight of one or more compounds of Formula 1
R(OH)ₙ Formula 1
wherein
R denotes an optionally substituted C₂₋₆hydrocarbyl or C₂₋₆carbohydrate moiety and n is an integer from 1 to 6; and
(d) 0.02 to 0.8 % by weight of surfactant relative to the total weight of the composition; and
(e) at least 15 % by weight of water;
wherein the % wt amounts are based on the total weight of the aqueous coating composition.

12. The inverted roof according to any one of the preceding claims wherein the inverted roof further includes a roof ballast on top of the cellular glass insulation layer (C).

13. A method of installing an inverted roof, the method comprising the steps of:
(i) installing a waterproofing layer (D) to a roof deck (E); and then
(ii) installing a cellular glass insulation layer (C) to the waterproofing layer (D) and roof deck (E) so that the waterproofing layer (D) is positioned in between the roof deck (E) and the cellular glass insulation layer (C);
and wherein the cellular glass insulation layer (C) comprises one or more layers of cellular glass insulation material (B) and the uppermost layer of cellular glass insulation material (B) includes a protective coating on its uppermost surface, such that the protective coating forms an upper face of the cellular glass insulation layer (C),
wherein the protective coating comprises an alkali silicate, and a particulate filler having an average particle size from 20 to 500 microns,
and wherein the thermal expansion coefficient of the particulate filler is within the range of 50 to 150% of the thermal expansion coefficient of the cell wall material of the cellular glass insulation material (B).

## Patentansprüche

1. Umkehrdach, umfassend:
eine Dachdecke (E), eine Schaumglasdämmschicht (C) und eine Abdichtungsschicht (D); und wobei die Dachdecke (E) die Abdichtungsschicht (D) und die Schaumglasdämmschicht (C) trägt; die Abdichtungsschicht (D) zwischen der Dachdecke (E) und der Schaumglasdämmschicht (C) positioniert ist; und
die Schaumglasdämmschicht (C) eine oder mehrere Schichten aus Schaumglasdämmmaterial (B) umfasst und die oberste Schicht aus Schaumglasdämmmaterial (B) eine Schutzbeschichtung (A) auf ihrer obersten Oberfläche derart einschließt, dass die Schutzbeschichtung eine obere Fläche der Schaumglasdämmschicht (C) ausbildet,
wobei die Schutzbeschichtung (A) ein Alkalisilikat und einen teilchenförmigen Füllstoff, der eine durchschnittliche Teilchengröße von 20 bis 500 Mikrometern aufweist, umfasst,
und wobei der Wärmeausdehnungskoeffizient des teilchenförmigen Füllstoffs innerhalb des Bereichs von 50 bis 150 % des Wärmeausdehnungskoeffizienten des Zellwandmaterials des Schaumglasdämmmaterials (B) liegt.

2. Umkehrdach nach Anspruch 1, wobei die Schutzbeschichtung zu 20 bis 65 Gew.-% Alkalisilikat, basierend auf dem Gesamtgewicht der Beschichtung, umfasst und das Alkalisilikat Kaliumsilikat umfasst.

3. Umkehrdach nach Anspruch 2, wobei die Schutzbeschichtung zu 20 bis 65 Gew.-% Alkalisilikat, umfassend Kaliumsilikat und Lithiumsilikat, einschließt.

4. Umkehrdach nach einem der vorstehenden Ansprüche, wobei die Schutzbeschichtung ferner ein Härtungsmittel umfasst.

5. Umkehrdach nach Anspruch 4, wobei das Härtungsmittel Aluminiumphosphat umfasst.

6. Umkehrdach nach einem der vorstehenden Ansprüche, wobei das teilchenförmige Füllstoffmaterial in einer Menge von 20 bis 40 Gew.-%, bezüglich des Gesamtgewichts der Beschichtung, vorhanden ist.

7. Umkehrdach nach einem der vorstehenden Ansprüche, wobei das teilchenförmige Füllstoffmaterial eine Schüttdichte von 0,3 kg/dm³ aufweist.

8. Umkehrdach nach einem der vorstehenden Ansprüche, wobei das teilchenförmige Füllstoffmaterial im Wesentlichen den gleichen Wärmeausdehnungskoeffizienten wie das Schaumglasdämmmaterial (B) aufweist.

9. Umkehrdach nach einem der vorstehenden Ansprüche, wobei die Schutzbeschichtung umfasst:
(a) zu 20 bis 65 Gewichts-% ein Alkalisilikat, umfassend Kaliumsilikat und Lithiumsilikat, in Mengen von
zu 10 bis 32 Gewichts-% K₂O;
zu 0,05 bis 1 Gewichts-% Li₂O; und
zu 10 bis 32 Gewichts-% SiO₂;
und das Gewichtsverhältnis von SiO₂ zu K₂O mindestens 1 beträgt; und
(b) zu 20 bis 40 Gewichts-% ein teilchenförmiges Füllstoffmaterial;
wobei alle %-Mengen auf dem Gesamtgewicht der Kaliumsilikatbeschichtung basieren.

10. Umkehrdach nach einem der vorstehenden Ansprüche, wobei die Schutzbeschichtung durch Härten einer wässrigen Beschichtungszusammensetzung, umfassend Alkalisilikat und ein Härtungsmittel, ausgebildet wird, wobei die wässrige Beschichtungszusammensetzung umfasst:
(a) zu 10 bis 50 Gew.-% das Alkalisilikat, das Alkalisilikat umfassend Kaliumsilikat; und
(b) zu 15 bis 60 Gew.-% das Härtungsmittel; und
(c) zu mindestens 15 Gew.-% Wasser;
wobei die Gew.-%-Mengen auf dem Gesamtgewicht der wässrigen Beschichtungszusammensetzung basieren.

11. Umkehrdach nach dem Anspruch 10, wobei die wässrige Beschichtungszusammensetzung umfasst:
(a) zu 10 bis 40 Gewichts-% das Alkalisilikat, umfassend Kaliumsilikat und Lithiumsilikat, in Mengen von
zu 5 bis 15 Gewichts-% K₂O;
zu 0,01 bis 1 Gewichts-% Li₂O; und
zu 5 bis 25 Gewichts-% SiO₂;
vorbehaltlich der Maßgabe, dass das Gewichtsverhältnis von SiO₂ zu K₂O mindestens 1 beträgt; und
(b) zu 15 bis 60 Gewichts-% das Härtungsmittel; und
(c) zu 0,1 bis 15 Gewichts-% eine oder mehrere Verbindungen von Formel 1
R(OH)ₙ Formel 1
wobei
R einen optional substituierten C₂₋₆-Hydrocarbyl- oder C₂₋₆-Kohlenhydratrest bezeichnet und n eine ganze Zahl von 1 bis 6 ist; und
(d) zu 0,02 bis 0,8 Gewichts-% Tensid, bezüglich des Gesamtgewichts der Zusammensetzung; und
(e) zu mindestens 15 Gewichts-% Wasser;
wobei die Gew.-%-Mengen auf dem Gesamtgewicht der wässrigen Beschichtungszusammensetzung basieren.

12. Umkehrdach nach einem der vorstehenden Ansprüche, wobei das Umkehrdach ferner eine Dachauflast oben auf der Schaumglasdämmschicht (C) einschließt.

13. Verfahren zum Installieren eines Umkehrdachs, das Verfahren umfassend die Schritte:
(i) Anbringen einer Abdichtungsschicht (D) auf eine Dachdecke (E); und dann
(ii) Anbringen einer Schaumglasdämmschicht (C) an der Abdichtungsschicht (D) und der Dachdecke (E), sodass die Abdichtungsschicht (D) zwischen der Dachdecke (E) und der Schaumglasdämmschicht (C) positioniert ist;
und wobei die Schaumglasdämmschicht (C) eine oder mehrere Schichten aus Schaumglasdämmmaterial (B) umfasst und die oberste Schicht aus Schaumglasdämmmaterial (B) eine Schutzbeschichtung auf ihrer obersten Oberfläche derart einschließt, dass die Schutzbeschichtung eine Oberseite der Schaumglasdämmschicht (C) ausbildet,
wobei die Schutzbeschichtung ein Alkalisilikat und einen teilchenförmigen Füllstoff, der eine durchschnittliche Teilchengröße von 20 bis 500 Mikrometern aufweist, umfasst,
und wobei der Wärmeausdehnungskoeffizient des teilchenförmigen Füllstoffs innerhalb des Bereichs von 50 bis 150 % des Wärmeausdehnungskoeffizienten des Zellwandmaterials des Schaumglasdämmmaterials (B) liegt.

## Revendications

1. Toiture inversée comprenant :
un platelage de toiture (E), une couche d'isolation en verre cellulaire (C) et une couche d'étanchéité contre l'eau (D) ; et dans laquelle le platelage de toiture (E) supporte la couche d'étanchéité contre l'eau (D) et la couche d'isolation en verre cellulaire (C) ; la couche d'étanchéité contre l'eau (D) est positionnée entre le platelage de toiture (E) et la couche d'isolation en verre cellulaire (C) ; et
la couche d'isolation en verre cellulaire (C) comprend une ou plusieurs couches de matériau d'isolation en verre cellulaire (B) et la couche supérieure de matériau d'isolation en verre cellulaire (B) comporte un revêtement protecteur (A) sur sa surface supérieure, de telle sorte que le revêtement protecteur forme une face supérieure de la couche d'isolation en verre cellulaire (C),
dans laquelle le revêtement protecteur (A) comprend un silicate alcalin, et une charge particulaire ayant une granulométrie moyenne de 20 à 500 micromètres,
et dans laquelle le coefficient de dilatation thermique de la charge particulaire est compris dans la plage de 50 à 150 % du coefficient de dilatation thermique du matériau de paroi cellulaire du matériau d'isolation en verre cellulaire (B).

2. Toiture inversée selon la revendication 1 dans laquelle le revêtement protecteur comprend de 20 à 65 % en poids de silicate alcalin par rapport au poids total du revêtement et le silicate alcalin comprend du silicate de potassium.

3. Toiture inversée selon la revendication 2 dans laquelle le revêtement protecteur comporte de 20 à 65 % en poids de silicate alcalin comprenant du silicate de potassium et du silicate de lithium.

4. Toiture inversée selon l'une quelconque des revendications précédentes dans laquelle le revêtement protecteur comprend en outre un agent de durcissement.

5. Toiture inversée selon la revendication 4 dans laquelle l'agent de durcissement comprend du phosphate d'aluminium.

6. Toiture inversée selon l'une quelconque des revendications précédentes dans laquelle le matériau de charge particulaire est présent en une quantité de 20 à 40 % en poids par rapport au poids total du revêtement.

7. Toiture inversée selon l'une quelconque des revendications précédentes dans laquelle le matériau de charge particulaire a une masse volumique apparente de 0,3 kg/dm³.

8. Toiture inversée selon l'une quelconque des revendications précédentes dans laquelle le matériau de charge particulaire a sensiblement le même coefficient de dilatation thermique que le matériau d'isolation en verre cellulaire (B).

9. Toiture inversée selon l'une quelconque des revendications précédentes dans laquelle le revêtement protecteur comprend :
(a) de 20 à 65 % en poids d'un silicate alcalin comprenant du silicate de potassium et du silicate de lithium en des quantités de
10 à 32 % en poids de K₂O ;
0,05 à 1 % en poids de Li₂O ; et
10 à 32 % en poids de SiO₂ ;
et le rapport pondéral de SiO₂ à K₂O est d'au moins 1 ; et
(b) de 20 à 40 % en poids d'un matériau de charge particulaire ;
où toutes les quantités en % sont exprimées par rapport au poids total du revêtement de silicate de potassium.

10. Toiture inversée selon l'une quelconque des revendications précédentes dans laquelle le revêtement protecteur est formé par durcissement d'une composition de revêtement aqueuse comprenant un silicate alcalin et un agent de durcissement, dans laquelle la composition de revêtement aqueuse comprend :
(a) de 10 à 50 % en poids du silicate alcalin, le silicate alcalin comprenant du silicate de potassium ; et
(b) de 15 à 60 % en poids de l'agent de durcissement ; et
(c) au moins 15 % en poids d'eau ;
dans laquelle les quantités en % en poids sont exprimées par rapport au poids total de la composition de revêtement aqueuse.

11. Toiture inversée selon la revendication 10 dans laquelle la composition de revêtement aqueuse comprend :
(a) de 10 à 40 % en poids du silicate alcalin comprenant du silicate de potassium et du silicate de lithium en des quantités de
5 à 15 % en poids de K₂O ;
0,01 à 1 % en poids de Li₂O ; et
5 à 25 % en poids de SiO₂ ;
sous réserve que le rapport pondéral de SiO₂ à K₂O soit d'au moins 1 ; et
(b) de 15 à 60 % en poids de l'agent de durcissement ; et
(c) de 0,1 à 15 % en poids d'un ou plusieurs composés de formule 1
R(OH)ₙ Formule 1
dans laquelle
R représente un fragment hydrocarbyle en C₂₋₆ ou glucidique en C₂₋₆ éventuellement substitué et n est un entier de 1 à 6 ; et
(d) de 0,02 à 0,8 % en poids de tensioactif par rapport au poids total de la composition ; et
(e) au moins 15 % en poids d'eau ;
dans laquelle les quantités en % en poids sont exprimées par rapport au poids total de la composition de revêtement aqueuse.

12. Toiture inversée selon l'une quelconque des revendications précédentes dans laquelle la toiture inversée comporte en outre un ballast de toiture au-dessus de la couche d'isolation en verre cellulaire (C).

13. Procédé d'installation d'une toiture inversée, le procédé comprenant les étapes consistant à :
(i) installer une couche d'étanchéité contre l'eau (D) sur un platelage de toiture (E) ; et ensuite
(ii) installer une couche d'isolation en verre cellulaire (C) sur la couche d'étanchéité contre l'eau (D) et le platelage de toiture (E) de sorte que la couche d'étanchéité contre l'eau (D) est positionnée entre le platelage de toiture (E) et la couche d'isolation en verre cellulaire (C) ;
et dans lequel la couche d'isolation en verre cellulaire (C) comprend une ou plusieurs couches de matériau d'isolation en verre cellulaire (B) et la couche supérieure de matériau d'isolation en verre cellulaire (B) comporte un revêtement protecteur sur sa surface supérieure, de telle sorte que le revêtement protecteur forme une face supérieure de la couche d'isolation en verre cellulaire (C),
dans lequel le revêtement protecteur comprend un silicate alcalin, et une charge particulaire ayant une granulométrie moyenne de 20 à 500 micromètres,
et dans lequel le coefficient de dilatation thermique de la charge particulaire est compris dans la plage de 50 à 150 % du coefficient de dilatation thermique du matériau de paroi cellulaire du matériau d'isolation en verre cellulaire (B).
